# EUROPEAN PATENT SPECIFICATION

(11) **EP 0 539 549 B1**
(45) Date of publication and mention of the grant of the patent: **14.08.1996**
(21) Application number: 92909734.3
(22) Date of filing: 12.05.1992
(51) Int. Cl.: A01F 15/07, A01D 90/08

(54) **A BALE WRAPPING MACHINE**
Ballenwickelmaschine
APPAREIL D'EMBALLAGE DE BOTTES

(30) Priority: 13.05.1991 IE 163191; 21.05.1991 IE 173191; 28.06.1991 IE 227091; 31.10.1991 IE 380991
(43) Date of publication of application: 05.05.1993
(73) Proprietor: IDOUGH INVESTMENT COMPANY, County Carlow (IE)
(72) Inventor: COX, Alfred, Anthony, County Carlow (IE)
(74) Representative: Shortt, Peter Bernard
(86) International application number: GB9200853
(87) International publication number: WO9220210

(56) References cited:
- WO-A-91/13540
- DE-U- 9 004 354
- FR-A- 2 446 588
- GB-A- 2 158 111
- GB-A- 2 228 246
- US-A- 4 909 694

## Description

### TECHNICAL FIELD

The invention relates to a bale wrapping machine. The invention is particularly concerned with a machine for wrapping bales of silage, hay, straw and the like (hereinafter referred to as "fodder") with a plastics film.

### BACKGROUND ART

It has become conventional practice in agriculture to form fodder into cylindrical-shaped bales which are then wrapped in a plastics film. This is a particularly suitable method of manufacturing silage because the silage is kept air-tight within the wrapped bale which, typically, is wrapped with up to six plies of plastics. The cylindrically shaped bales are commonly called "big round bales". Machines for wrapping big round bales with a plastics film are described, for example, in British Patent Specifications Nos. 2191984A, 2228246A and EP 0208034A (GB 2159489B).

Bale wrapping machines of the kind described comprise a wheeled chassis which may be towed by a tractor. The chassis carries a tipping platform which, in turn, supports a turntable. The turntable is rotatable about a vertical axis. The turntable carries a pair of spaced rollers each of which rotates about a horizontal axis. An endless belt is stretched between the rollers and rotates with the rollers. In order to wrap a large round bale of fodder material with plastics film, the round bale is lifted onto the turntable by means of lifting arms. The bale rests on the endless belt. The free end of a roll of plastics film is attached to the bale and the turntable is then rotated about a generally vertical axis to cause the sheet of film to be wrapped around the bale. However, if no movement of the bale about its longitudinal axis were to occur the bale would merely be wrapped with a single band having the thickness of the width of the plastics film. However, on each rotation of the turntable the endless belt is caused to move for a predetermined distance which, in turn, causes the bale to roll about its surface, i.e. about a horizontal axis. This rolling of the bale on the belt allows a new area of bale to be wrapped by the film on each rotation of the turntable, thus eventually achieving a complete covering of the bale with a substantial degree of overlap of the plastics film.

In the bale-wrapping machines described above the bale to be wrapped is mounted on a turntable which rotates about a vertical axis, and the dispenser for the roll of plastics film is fixed. It is the rotation of the bale about the vertical axis which causes the film to be unrolled from the dispenser. However, it is also known from the prior art, for example in EP-B-0110110, DE 3642513A, and GB 2193683A, for the bale to be mounted on rollers which rotate the bale only about the horizontal axis. In this arrangement there is provided a rotary support arm for the film dispenser which rotates the film dispenser, about a vertical axis, around the bale, while the bale is being turned about a horizontal axis.

More recently, there has been a tendency for farmers to use baler machines which form the fodder into large bales of a substantially rectangular or square shape. Such machines include Ford New Holland D1000, Hesston 4600, Hesston 4700, Welger Delta 4000, Mengele SB 8580, Claas Quadrant, Deutz Fahr G.P. 3.612. The bales produced by these machines are commonly referred to as "big square bales". These bales may, in fact, have a cross-section which is either square or rectangular. These bales present a problem because they cannot adequately be wrapped with film using conventional big bale wrapping machines.

German Gebrauchsmuster No. G9004354.5 (Gebruder Welger GmbH & Co. KG.) discloses apparatus for wrapping bales of fodder. It is said to be an object of the invention disclosed in DE G 9004354.5 to provide apparatus which can wrap rectangular big bales of fodder with a film. The apparatus comprises a frame having a drivable, substantially horizontally disposed, conveyor floor, characterized in that the conveyor floor has boundary walls at each end, the boundary wall located at the front with respect to the direction of travel of the conveyor floor being formed as an upwardly directed, inclined conveyor. The inclined conveyor may comprise conveyor rollers, which are drivable at a greater speed of advance than the conveyor floor. The boundary wall at the opposite end from the inclined conveyor comprises a freely rotatable, retaining roller disposed at a spacing above the conveyor floor. The apparatus described in this specification will not operate satisfactorily in practice to wrap rectangular or square bales because the drivable upwardly directed inclined conveyor is not in itself capable of tumbling rectangular and square bales about a horizontal axis.

The contents of PCT Application No. WO-A-91/13540 (Kverneland Underhaug As) may be comprised in the state of the art within the terms of Art.54(3)EPC, for the purposes of novelty only. There is disclosed in that application a bale wrapper apparatus for applying a pre-stretched film around a bale of rectangular cross-section in order to form an air tight and water tight wrapping. The apparatus comprises a platform which rotates about a vertical axis, and a pair of rollers mounted on the platform to rotate about horizontal axes and over which slack belts are taken and which define a trough shape into which the rectangular section of the bale can be received with the upper and lower sides disposed substantially horizontally. A support is mounted on the chassis and carries a film dispenser reel and a film pre-stretcher mechanism and after attachment of the leading end of the film to the bale by manual or automatic means, combined rotation of the bale about a vertical axis and about a horizontal axis causes the film to be withdrawn and wrapped in generally helical fashion around the outer periphery of the bale. In order to compensate for possible variation in angular velocity of the rotating bale, by reason of its rectangular cross-section, (and the difficulties of engaging it uniformally with the slack belts), a guide arrangement is arranged above one of the rollers in order to engage edge regions on the longer sides of the bale cross-section and thereby prevent the bale from falling onto the roller, and also retarding the angular rotation of the bale. It is said that the function of the guide arrangement is to act on the tumbling rotation of the bale so as to maintain a substantially uniform rate of angular velocity during each revolution of the bale, whereby substantially uniform helical windings of film can be applied around the bale, despite its rectangular cross-section.

### DISCLOSURE OF INVENTION

It is an object of the invention to provide an apparatus and a method which is suitable for wrapping bales of fodder of various shapes, in particular bales of fodder having a cross-section of square or rectangular shape.

Accordingly, the present invention provides apparatus for wrapping large rectangular or square bales of fodder with a strip of wrapping material, comprising a support which is adapted to support the bale, conveying means including a substantially horizontally-disposed conveyor floor on said support adapted to turn the bale about a substantially horizontal axis, means for continuously supplying a strip of wrapping material to the bale as the bale is turned through said axis to wrap the wrapping material around the bale, wherein the conveying means includes driven means inclined upwardly at one end of the conveyor floor for imparting an upward motion, in a path inclined upwardly from the upper surface of the conveyor floor, to a leading portion of the bale, and a roller located at the opposite end of the conveyor floor, whereby the bale is turned about a horizontal axis of the bale, characterised in that the roller includes drive means for driving said roller such that when the bale is in contact with said roller, the roller imparts a downward motion to a trailing portion of the bale.

The driven means for imparting an upward motion to a leading portion of the bale, preferably, comprises a plurality of driven rollers disposed in parallel arrangement in an array which is inclined upwardly from the upper surface of the conveyor floor. Alternatively, the means for imparting an upward motion to a leading edge portion of the bale may comprise an inclined conveyor belt or the like inclined upwards from the conveyor floor. The means for importing a downward motion may also comprise an inclined conveyor belt.

Suitably, the conveying means includes a conveyor belt disposed substantially horizontally on the floor of the support which is a turntable, and rotatable about two rollers extending transversely of the turntable and located at one end and at the opposite end respectively of the conveyor floor and turntable.

In one embodiment, particularly suitable for wrapping rectangular bales, the distance between the rollers and the length of the conveyor belt is such that there is a pronounced sag in the belt. The sag may be of the order of from 65 to 85 mm below the horizontal.

Preferably, the turntable is provided with upwardly extending restraining members which are adapted to restrain side displacement of a bale supported on the conveyor floor. The restraining members may comprise upstanding rollers provided to each lateral side of the conveyor floor and rotatable about substantially vertical axes, or axes inclined to the vertical. The restraining members may also include horizontally-disposed rollers.

A third embodiment of the invention provides apparatus for wrapping a large rectangular or square bale of fodder with a strip of wrapping material, comprising a support which is adapted to support the bale, conveying means to turn the bale about a substantially horizontal axis, and means for continuously supplying a strip of wrapping material to the bale as the bale is turned through said axis to wrap the wrapping material around the bale, and the conveying means comprises a slack endless conveyor belt suspended above the support and includes drive means for the belt such that a first portion of the belt travels upwardly in an upwardly inclined path at one end of the support while a second portion of the belt travels downwardly in a downwardly inclined path at an opposite end of the support, characterised in that the endless conveyor belt has a substantial sag in the conveyor belt which defines a cradle in the belt to receive the bale and is adapted to assume a substantially u-shape or v-shape when a bale is placed on the belt, the sag in the belt being such that there is contact between the belt and adjoining sides of the bale during rotation of the bale which maintains control of the rotational movement of the bale as the bale is turned about a horizontal axis of the bale.

The conveyor belt is suspended from parallel rollers spaced above the support which may comprise a turntable, one roller being located forwardly of the turntable and the other rearwardly of the turntable, and wherein at least one of said rollers is driven to cause the belt to travel about said rollers.

Suitably the belt travels about four rollers comprising two lower rollers disposed transversely of the turntable and located forwardly and rearwardly of the turntable respectively, and two upper rollers spaced above and parallel to the lower rollers, and wherein at least one of said upper rollers is a driven roller. There is considerable sag in the conveyor belt to allow it to assume the u-shape or v-shape discussed above. The belt thus forms a cradle in which the bale is nested. The sag in the conveyor belt is such that the belt comes into contact with at least two adjoining side surfaces of the bale at all times during the turning of the bale about its horizontal axis.

In accordance with another aspect, the invention provides a method of wrapping large bales of fodder of substantially rectangular shape with a strip of wrapping material which includes the steps of :
a) placing the bale on a support with a shorter transverse axis of the bale disposed transversely of the support and a larger longitudinal axis disposed substantially upright of the support, the support comprising an endless conveyor belt,
b) attaching a free end of a supply of said wrapping material to a surface of the bale,
c) driving the conveyor belt to advance a leading corner portion of the bale upwardly from the horizontal along an inclined path to incline the longitudinal axis of the bale from a substantially vertical position to an inclined position, and simultaneously advancing a trailing corner portion of the bale along a downwardly inclined path,
d) advancing the trailing corner of the bale along an upwardly inclined path while a following corner of the bale is advanced along a downwardly inclined path, and continuing the advancement to rotate the bale about its transverse axis,
   characterised in that the belt has a substantial sag which assumes a substantial u-shape or v-shape as the bale is advanced along said inclined paths, and including the additional step of:
e) controlling the rotational movement of the bale by cradling the bale in the substantial sag in the belt and by maintaining contact between the belt 12 and at least two adjoining sides of the bale.

The apparatus of the invention may also include a device for loading the bales, particularly long rectangular bales, onto the conveyor floor positioned on the turntable of the bale wrapping machine. There are known lifting arms for lifting round bales onto the conveyor floor of bale wrapping machines. The conventional lifting device comprises outrigger arms which are positioned laterally of the bale wrapping machine and movable from a first position, in which they lie on the ground adjacent the machine to a second upright position. The outrigger arms include a pair of forks which engage beneath a round bale positioned on the ground. The forks are then lifted by means of a hydraulic ram and the bale is caused to roll over rollers and onto the turntable of the bale wrapping machine. One form of such lifting means is described, for example, in European Patent Specification No. 0208034A. The conventional bale loading device as described in the aforesaid European Patent Specification No. 0208034A is not, however, suitable for loading long rectangular bales onto the turntable of a bale wrapping machine with the bale standing on its edge on the turntable with a longer side upright, as described above.

The loading device is particularly suitable for loading rectangular bales edgewise onto the conveyor floor of the bale wrapping machine with a longer side upright.

The loading device for loading bales onto the conveyor positioned on the turntable of the bale wrapping machine, comprises gripping means for gripping the bale, a lifting means for lifting the gripping means upwards through an arc of substantially 90° in a first substantially vertical plane, means for moving the elevated gripping means through a further arc of substantially 90° in a second substantially vertical plane which is substantially normal to said first plane.

The gripping means comprises at least one hydraulically-operated gripping arm which is adapted to grip the bale. The gripping means may include a frame which is adapted to fit around the top sides of the bale, the gripping arm being attached to one end of the frame and adapted to squeeze the bale between said arm and an end wall of the frame. The gripping arm may be pivotally mounted on the frame and operated by means of a hydraulic ram.

The gripping means may be pivotally mounted on a support structure adapted for connection to the bale wrapping machine, a first means being provided for swinging the gripping means relative to the support structure about a first horizontal pivot upwardly through an arc of substantially 90°. The support structure is pivotally connected to the bale wrapping means and a second means is provided for swinging the gripping means and support structure through a further arc of substantially 90°, about a second horizontal pivot disposed substantially normal to the first pivot.

### BRIEF DESCRIPTION OF THE DRAWINGS

Some embodiments of the invention are hereinafter described with reference to the accompanying drawings, wherein
Figure 1 is a perspective view of a typical "round" bale of fodder which is of cylindrical shape;
Figure 2 shows a cross-section of the bale of Figure 1;
Figure 3 is a perspective view of a typical "square" bale of fodder which is square in cross-section;
Figure 4 is a cross-sectional view of the bale of Figure 3;
Figure 5 is a perspective view of a typical bale of fodder which is of rectangular shape in cross-section;
Figure 6 is a cross-sectional view of the bale of Figure 5;
Figure 7 is a side elevation of a known bale wrapping machine for use in wrapping round bales of fodder, the machine being shown at the start of a wrapping cycle;
Figure 8 is a side elevation of the machine of Figure 7 in the course of wrapping a round bale of fodder;
Figure 9, is a perspective view of a first embodiment of a bale wrapping machine of the invention for use in wrapping rectangular bales;
Figure 10 is a side elevation of a bale wrapping machine of Figure 9 in the start position;
Figure 11 shows the machine of Figure 9 at a second stage in the wrapping process;
Figure 12 shows the machine of Figure 9 at a third stage in the wrapping process;
Figure 13 shows the machine of Figure 9 at a final stage in the wrapping process;
Figures 14 and 15 show the machine of Figure 9 during tipping of the wrapped bale;
Figure 16 is a side elevation opposite to that shown in Figures 10 to 15, to an enlarged scale, of the drive arrangement for the roller assembly of the machine of Figure 9;
Figure 17 is a plan view of a tipping platform of the machine of Figure 9, showing indexing means;
Figures 18 and 19 are front and side elevations, respectively, to an enlarged scale, of side restraining rollers of the machine of Figure 9;
Figure 20 is a side elevation of the bale wrapping machine of Figures 9 to 15 with a loading device of the invention attached thereto;
Figure 21 shows a side elevation, slightly enlarged, of the loading device shown in Figure 20 about to grip a bale of fodder;
Figures 22 and 23 show the device of Figure 20 with the bale gripped;
Figure 24 is a view similar to Figure 22 but showing the bale lifted through approximately 90°;
Figure 25 shows a detail of Figure 24;
Figure 26 is a rear elevation of the bale wrapping machine of Figure 9 showing the bale having been turned by the lifting device through a further 90°;
Figure 27 is a side elevation, a second embodiment of a bale wrapping machine according to the invention;
Figure 28 is a side elevation showing a detail of Figure 27 but opposite to that shown in Figure 27,
Figure 29 is an end elevation of Figure 27;
Figures 30 to 34 are side elevations of a third embodiment of a bale wrapping machine of the invention showing the bale in various dispositions during its turning movement, and
Figure 35 is a side elevation of a fourth embodiment of a bale wrapping machine of the invention.

### MODES FOR CARRYING OUT THE INVENTION

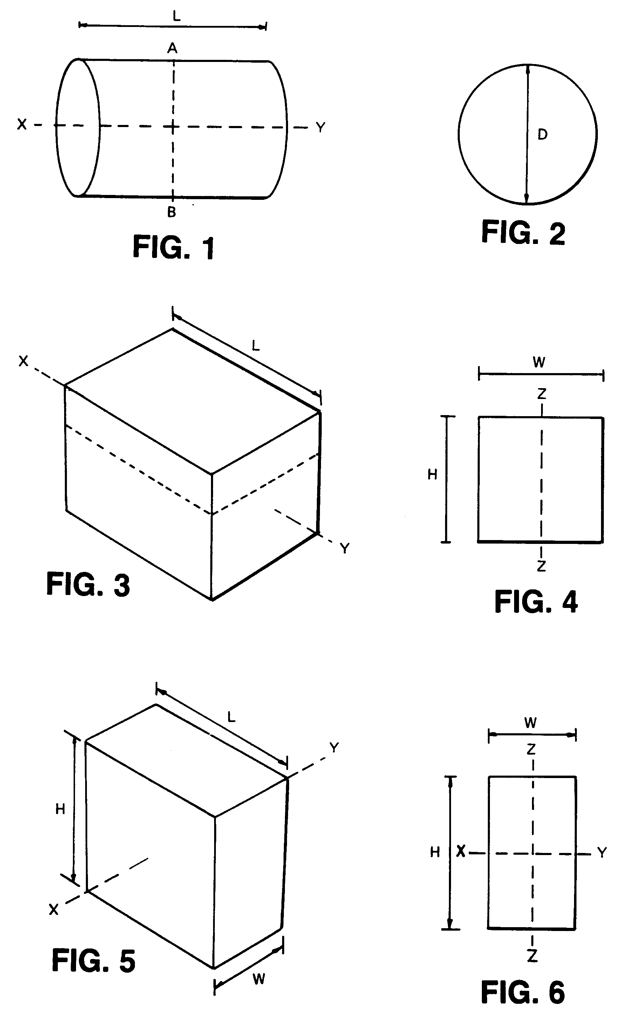

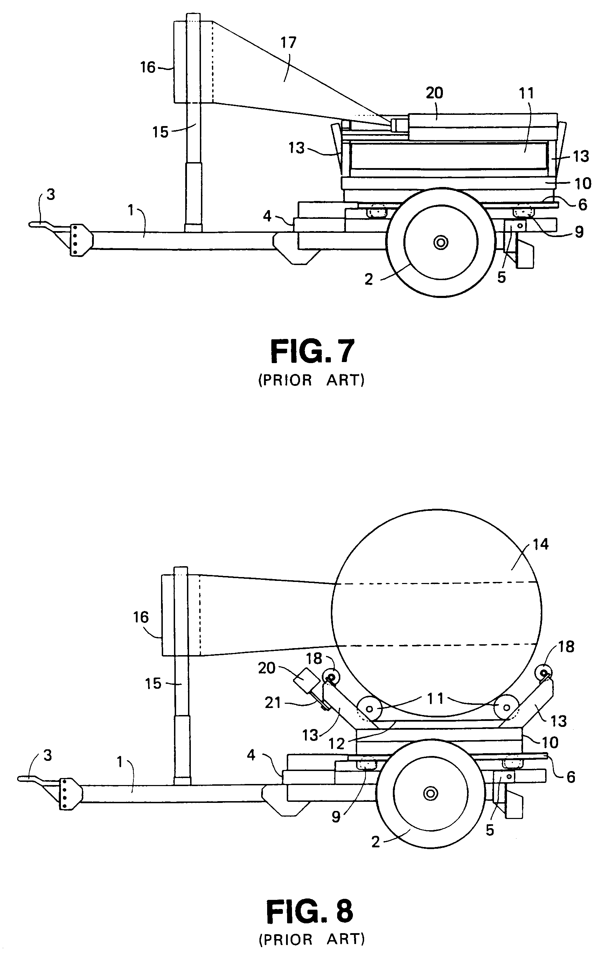

Referring to the drawings, Figures 1 and 2 show a conventional "round" bale of fodder, which, in fact, is of cylindrical shape. Typically the length l of such bales is of the order of 1.25 to 1.5 m, and the diameter is of the order of 1.25 to 1.3m. These bales can conveniently be wrapped using a conventional bale wrapping machine, as shown in Figures 7 and 8 of the drawings.

Figures 3 and 4 show a large bale of fodder which is square in cross-section. These bales which are hereinafter referred to as "square" bales typically include the following types of bale:

| Bale Manufacturer and Model | Bale Dimensions (m) L x H x W |
|---|---|
| Ford New Holland D1000 | 1.50 x 0.6 x 0.9 |
| Hesston 4600 (in pairs) | 1.50 x 0.47 x 0.8 |
| Hesston 4700 | 1.50 x 0.83 x 0.78 |
| Welger Delta 4000 | 1.50 x 0.7 x 0.8 |
| Mengele SB 8580 | 1.50 x 0.85 x 0.8 |

The line x-y is intended to illustrate the longitudinal axis of the bale. The outline of the bale shown in full lines is typical of a Hesston bale, while the lower portion delimited by a broken line is typical of a Ford New Holland bale.

Figures 5 and 6 illustrate a typical large rectangular bale (hereinafter referred to as a "rectangular bale"). The rectangular bales include the following bale types:

| Bale Manufacturer and Model | Bale Dimensions (m) L x H x W |
|---|---|
| Claas Quadrant | 1.20 x 0.7 x 1.20 |
| Deutz Fahr G.P. 3.612 | 1.20 x 0.6 x 1.20 |

In this case, the longitudinal axis is illustrated by the broken line of z-z while the shorter transverse axis is illustrated by the broken line x-y.

Referring now to Figures 7 and 8 these show a known bale wrapping machine suitable for use in wrapping round bales. The operation of this machine is described in detail in the applicants' Irish Complete Patent Specification No. 3854/89 (GB. 2241916A), the contents of which are incorporated herein by way of reference.

This bale wrapping machine comprises a chassis 1 having a pair of wheels 2. The chassis is provided with a hitch 3 for attachment to a tractor. A tipping platform 4 is mounted on the chassis 1. The tipping platform is pivotally connected to a bracket 5 at the rear of the chassis 1 such that the tipping platform may be tipped to unload the wrapped bale.

A turntable 6 is mounted on the platform 4. The platform 4 is provided centrally with a main bearing which is bolted onto the platform. The main bearing carries a central spindle of the turntable 6. The underside of the turntable 6 is fitted with wheels 9 which are adapted to run upon the upper surface of the tipping platform 4, as the turntable 6 rotates. The turntable 6 has a superstructure 10 on which is mounted a pair of spaced rollers 11. The rollers are mounted for rotation about horizontal axes. An endless belt 12 is mounted rotationally about the rollers and forms a conveyor floor. The superstructure 10 is also provided with outwardly inclined arms 13 which define a cradle which is adapted to receive a large bale 14 of silage or other fodder for wrapping. The bale 14 is lifted into the cradle by means of a hydraulically-operated lifting device which extends laterally from the machine. When in the cradle, the bale 14 is carried on and is rotated by the conveyor belt 12. The top ends of the arms 13 are provided with non-driven idler rollers 18 which assist in positioning the bale 14 in the cradle.

Forwardly of the chassis 1 is mounted an upright 15 on which is mounted a film dispensing system 16. The dispenser system 16 includes a known dispenser and pretensioning unit through which sheeting of plastics film 17 is fed and stretched.

A film handling device 20 of the kind described in the aforesaid Irish Patent Specification No. 3854/89 and GB 2241916A is adapted to grip the free end of sheeting 17 and to wrap the sheeting around the bale 14 during the first two revolutions of the turntable 6. By this stage the film will have frictionally attached itself to the bale. The device then releases the sheeting which continues to wrap around the bale until the bale is fully wrapped. At the end of the wrapping step, the device again grips the sheeting 17, cuts the sheeting and holds the cut end of the sheeting ready for the next bale. This occurs when the tipping platform is tipped upwardly to unload the wrapped bale over rear idler roller 18.

While the bale wrapping machine described above with reference to Figures 7 and 8 is suitable for wrapping cylindrical bales of fodder with up to four plies of plastics film it has been found to be unsatisfactory for adequately wrapping large square or rectangular bales of fodder of the kind described in Figures 3 to 6 of the drawings.

The applicants have endeavoured to wrap rectangular bales using the machine of Figures 7 and 8, by placing the bale with its longer length l transversely across the bed of the machine and turning the bale about its longer transverse axis in substantially the same way as with a round bale. However, it was found that this arrangement did not work satisfactorily because the bale would not turn adequately on the turntable and substantial areas of the bale remained uncovered.

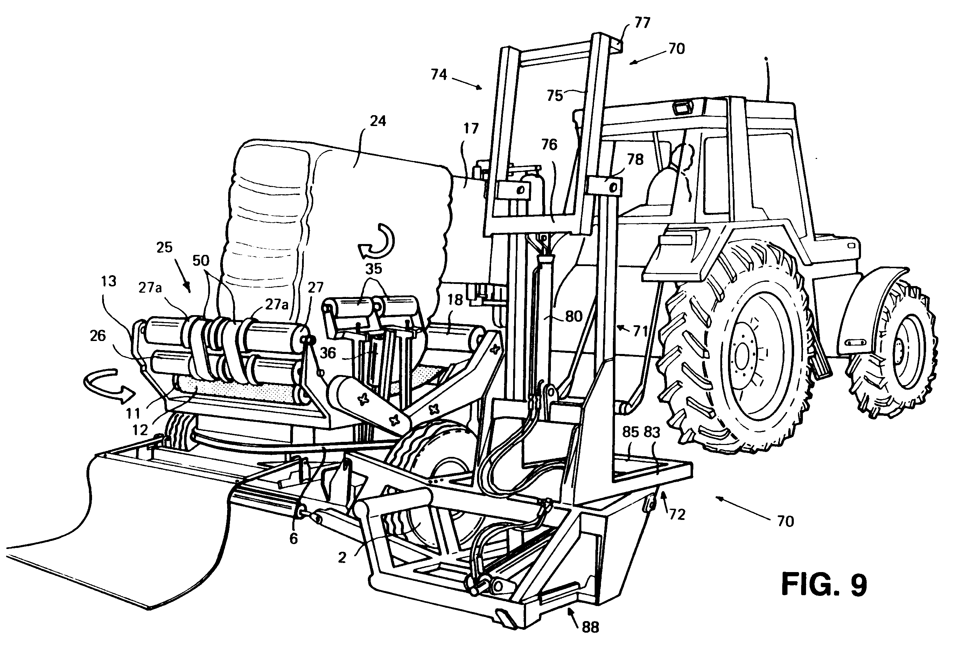

A bale wrapping machine according to the invention, which is particularly suitable for wrapping rectangular bales, is now described with reference to Figures 9 to 19 of the accompanying drawings. The machine of the invention comprises a modification of the round bale wrapping machine as described above in relation to Figures 7 and 8. Apart from the bale-handling arrangement above the turntable 6, the machine of the invention is constructed substantially as described with reference to Figures 7 and 8 and like reference numerals denote like parts.

The superstructure 10 of the machine of the invention is provided with outwardly inclined arms 13, 13a which define a cradle 25 which is adapted to receive a bale 24 of fodder to be wrapped. A pair of spaced opposed arms 13a extend forwardly (in terms of the direction of travel of the machine), of the machine, while a pair of shorter opposed arms 13 extend rearwardly of the machine. The arms 13a are longer than in the prior art machine such that the cradle is wider and deeper. An elongate driven roller 18 is mounted between the opposed arms 13a which extend forwardly of the machine. The driven roller 18 thus extends transversely of the cradle 25.

A pair of spaced driven belt rollers 11a, 11 are mounted on brackets not shown) on the superstructure 10. The rollers 11a, 11 are adapted for rotation about horizontal axes. One roller 11a is mounted forwardly (in terms of the direction of travel of the machine) of, and transversely of, the cradle 25 whereas a rear roller 11 is mounted rearwardly of and transversely of the cradle 25. An endless belt 12 is mounted for rotation about the belt rollers 11, 11a. The belt 12 may be made from a suitable rubberised fabric and may have cleats, ribs or the like on the surface thereof to improve its frictional properties. The width of the belt 12 is substantially the full width of the belt rollers 11a, 11 and also substantially the full width of the cradle 25. Thus the endless belt 12 effectively forms a conveyor floor of the cradle 25. Preferably, at least one of the belt rollers 11a, 11 is moveable relative to the other roller so as to vary the distance between the rollers and thus the tension in the belt. For reasons which will be discussed below, the central dip or sag in the belt 12 may be greater than that used in conventional machines. Rollers 11, 11a are of equal diameter. The spacing of these rollers is greater than in the conventional machine. Preferably the sag in the belt is from 65 to 85 mm below horizontal. The distance between the belt rollers 11a, 11 is adjusted to provide this desired sag.

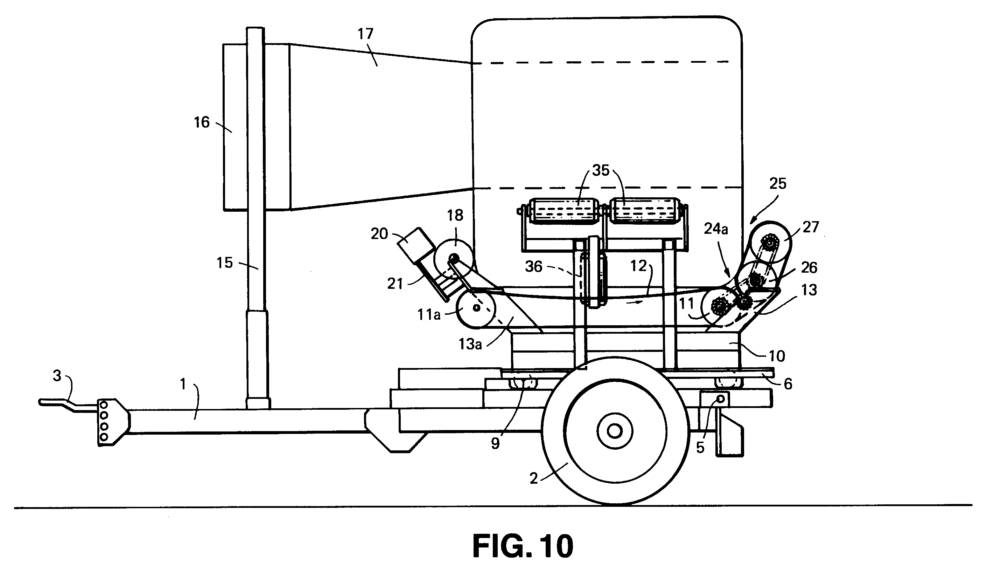

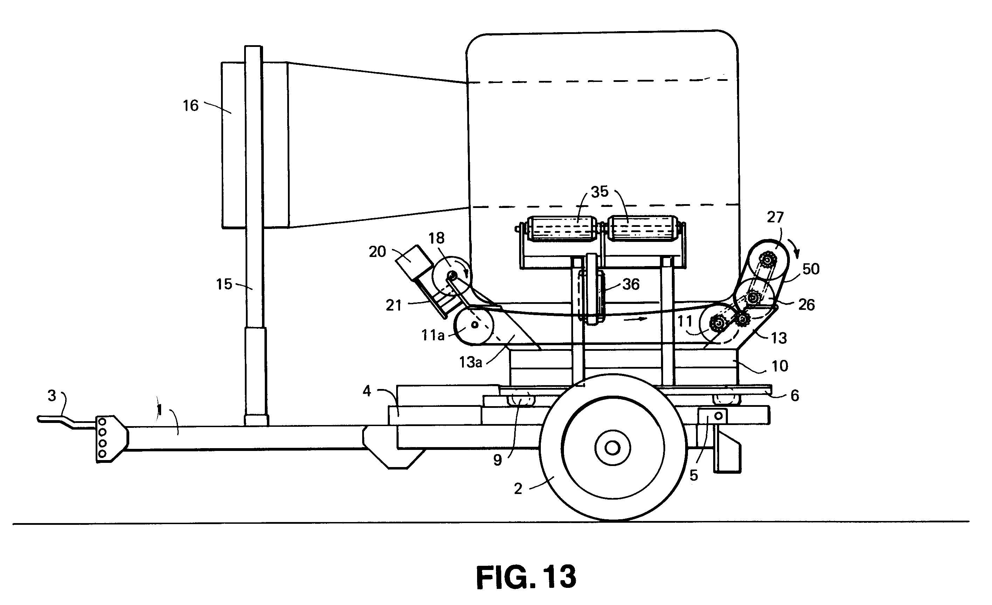

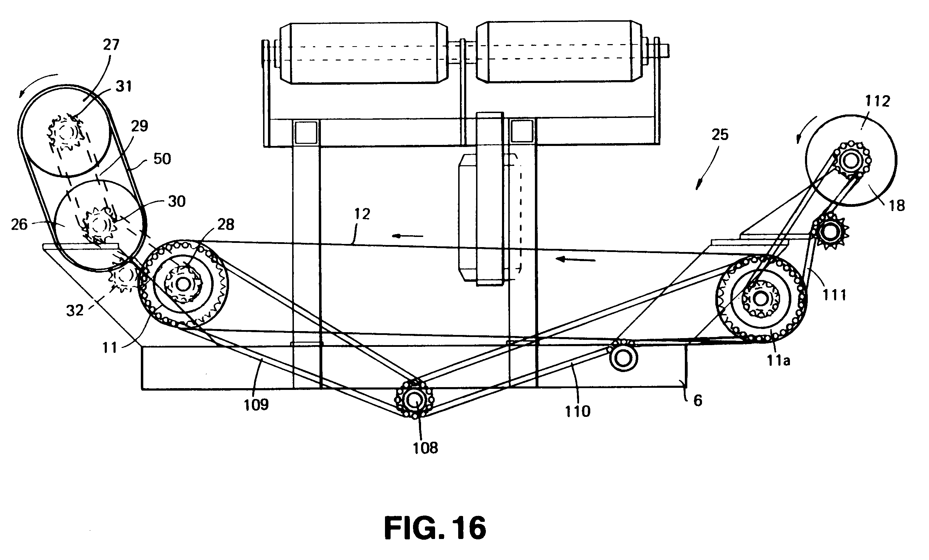

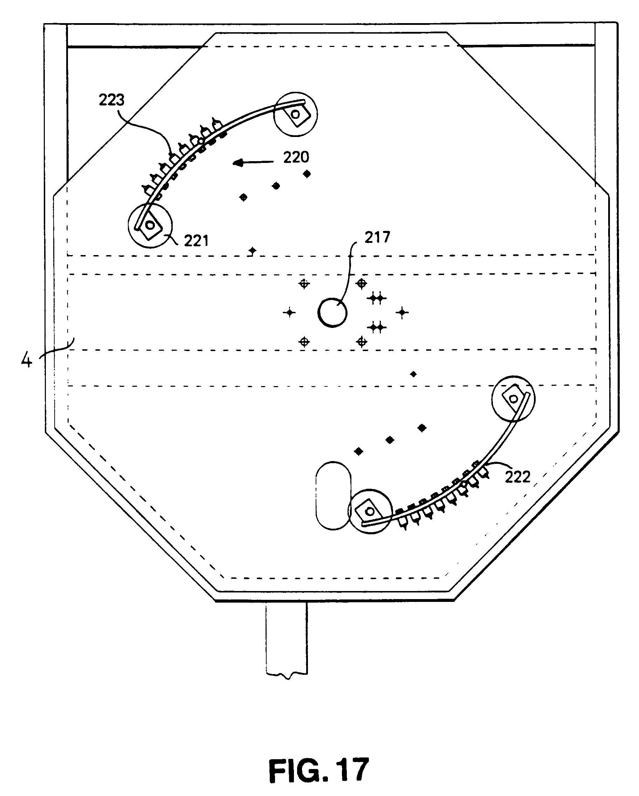

The rear belt drive roller 11 is driven from a powered shaft through an indexing mechanism which causes the belt 12 to advance stepwise in the direction of the arrows shown in Figure 10 and 13, for each two revolutions of the turntable 6. The drive and indexing mechanism is described in more detail below in relation to Figures 16 and 17. The drive rollers 11 and 11a are driven in a clockwise direction as seen in Figure 10.

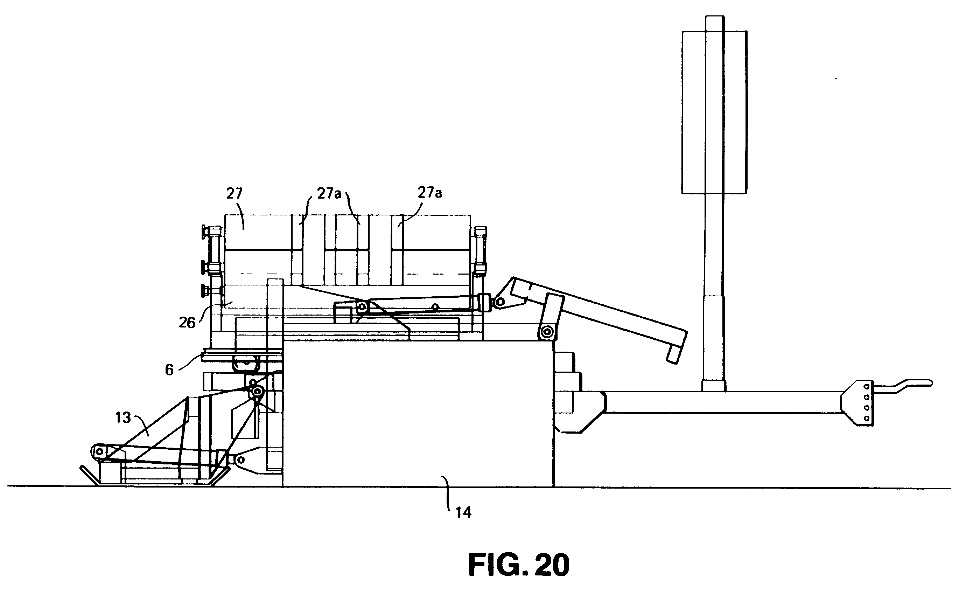

In accordance with the invention a conveyance means, extending upwardly at an inclined angle upwardly from the base of the cradle 25 is provided by means of the driven belt roller 11 and two further driven conveying rollers 26, 27 positioned successively above and outwardly from the belt roller. Means for imparting a downward motion to the bale during wrapping is provided by roller 18 at the opposite end of the cradle. Roller 18 is driven from roller 11a. The additional conveying rollers 26, 27 and 18 extend across the width of the cradle 25 parallel to the belt rollers 13 and 13a, as shown in Figure 10. The surfaces of the rollers 26, 27 have improved frictional characteristics to improve their grip on the bale. This may be achieved by applying frictional belts 27a (see Figs. 9 and 20) on the surfaces of the individual rollers. Additional loose belts 50 may be fitted around the pair of rollers 26, 27 (see Figures 9, 16 and 20). Roller 18 may also be provided with frictional belts if necessary.

The arrangement for driving the rollers 11, 26, 27 and 11a, 18 is shown in more detail in Figure 16, which is a view of the drive arrangement from the side of the bale wrapping machine opposite to that shown in Figures 10 to 15.

The drive for the rollers is taken from a centrally disposed sprocket 108 which is fitted to the end of a drive shaft (not shown) which in turn is rotated through the indexing assembly. The indexing assembly is described in more detail below with reference to Figure 17. Drive from sprocket 108 is transmitted by a belt 109 to the driven belt roller 11 which, in turn, drives rollers 26 and 27.

The end of the driven belt roller 11, opposite the drive input end (i.e. opposite the end shown in Figure 16), is fitted with a sprocket 28 which is rotated with roller 11. The sprocket 28 engages a chain 29 which, in turn, engages with sprockets 30, 31 on the ends (opposite to those shown in Figure 16) of the conveying rollers 26, 27 respectively. In this way the conveying rollers 26, 27 are caused to rotate with the belt roller 28 and in the same direction as the belt roller 28, that is in a clockwise direction as shown by the arrows in Figure 16. A guide sprocket 32 for the chain 29 may also be provided as shown in Figure 16.

Drive from sprocket 108 is also transmitted, by means of a belt 110 to roller 11a. Thus, in this embodiment both belt rollers 11, 11a are driven. From roller 11a the drive is transmitted by a belt 111 to a sprocket 112 on roller 18. Thus, roller 18 is also driven in the direction of the arrows shown in the drawing.

It will be appreciated that instead of the chain and sprocket arrangement a belt and pulley system may be used to drive the conveying rollers 26, 27. Alternatively, the rollers could be hydraulically driven.

The indexing arrangement for driving the drive shaft of sprocket 108 is shown in Figure 17. The drive shaft (not shown) is mounted for rotation in bearings fixed to the underside of the turntable 6. The turntable 6 is rotated by means of a hydraulically driven belt which engages in a groove on the periphery of the turntable 6 (see Fig.9). Figure 17 is a plan view of the tipping platform 4 upon which the turntable 6 rotates. The tipping platform 4 has a main bearing 217 which carries the central spindle of the turntable 6. An indexing quadrant 220 is mounted on the platform 16 by means of rubber buffers 221, which serve to absorb any shocks imparted to the indexing quadrant. Optionally, a second indexing quadrant 222 is mounted on a diametrically opposite side of the platform. The indexing quadrant carries a plurality of cam rollers 223. The end of the drive shaft of sprocket 108, opposite the sprocket 108, is fitted with a toothed wheel (not shown). This wheel engages with the cam rollers 223. For every rotation of the turntable 6 about the tipping platform 4, the teeth of the toothed wheel will engage with the cam rollers 223 thus imparting rotary action to the shaft, which in turn is transmitted to the sprocket 108 to cause rotation of rollers 11, 11a and 18, 26 and 27 as described above. The number of cam rollers and the spacing of the rollers in the indexing quadrant determine the distance of movement of the rollers 11, 11a and hence the distance of movement of the conveyor belt 12 for each rotation of the turntable 6. Thus, the forward movement of the conveyor belt 12 is not continuous but is of an intermittent stepwise nature. The rollers 18, 26 and 27 move in likewise intermittent fashion. Where two indexing quadrants are used, as shown in Figure 17, there are two forward movements of the rollers 11, 11a, 18, 26 and 27, and the conveyor belt 12 for each revolution of the turntable 6. Where only a single indexing quadrant is used there is one movement forward per revolution of the turntable 6. The distance of forward movement of the conveyor belt 12 and cam rollers per revolution, and also the degree of overlap of the wrapping film, may be adjusted by varying the number of cam rollers 223 in the indexing quadrants. Suitably, for handling rectangular bales there are two indexing quadrants each having eleven cam rollers. For square bales it has been found suitable to have one indexing quadrant having sixteen cam rollers. The degree of forward movement is about 12 mm per cam roller 223 in the indexing quadrant. The indexing arrangement is described in more detail in our U.K. Patent Specification No. GB 2228246A, the contents of which are incorporated herein by way of reference.

The intermittent stepwise forward movement of the conveyor belt 12 and the rollers 18, 26, 27 has been found to be of importance in controlling the tumbling, about a transverse axis, of rectangular and square bales on the conveyor belt 12. It has been found that by using an intermittent, rather than a continuous forward movement, a more controlled and definite tumbling action is achieved. In the case of rectangular bales it is found to be advantageous to use a double indexing quadrant so that there are two forward steps of the conveyor belt 12 and associated rollers for each revolution of the turntable 6. A single indexing quadrant is found to suffice in the case of machines used to wrap square bales.

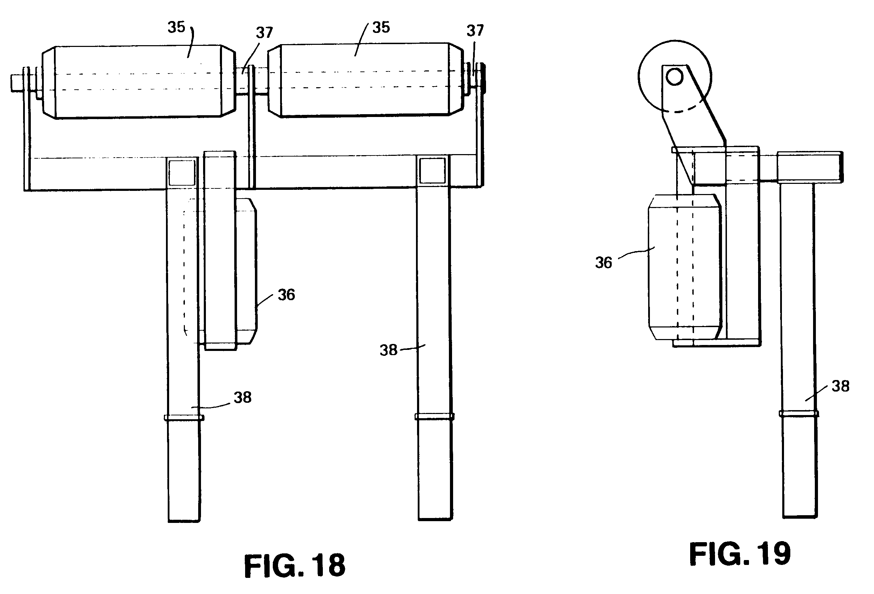

As shown, for example in Figures 9 and 10, a pair of spaced side restraining rollers 35 is provided for each lateral side of the cradle 25. The roller assembly is shown in more detail in Figures 18 and 19. The rollers 35 are of cylindrical shape. The rollers 35 are each independently rotatably mounted on a horizontal bearing 37 which is carried by brackets 38 fixed to the superstructure 10. A third vertically disposed roller 36 is positioned below the horizontal rollers 35. The purpose of these rollers is to restrain the bale of fodder 24 within the cradle during the wrapping process as described hereinafter. One set of rollers 35, 36 is spaced from the opposite set a distance very slightly greater than the width of the bale 24 such that the bale fits snugly between the rollers. As an alternative to the arrangement shown in Figures 18 and 19, each roller assembly may include a single central vertically disposed roller 36 and two side rollers 35. The side rollers 35 are mounted on axes which are inclined to the horizontal such that each of the rollers 35 slope inwardly towards the top of roller 36.

The operation of the bale wrapping machine of the invention is now described. In order to prepare the bale wrapping machine for the wrapping of a bale, the turntable 6 is rotated to a position in which the film handling device 20 is located at the front of the machine. The free end of the roll of plastics film 17 is placed in a gripper of the film handling device 20. The turntable 6 is then rotated anti-clockwise through 90°. The rectangular bale of fodder to be wrapped is then lifted into the cradle 25 of the machine either by means of a suitable loader or by lifting means fitted to the machine as described hereinafter. The bale 24 is placed in an upright position in the cradle 25 with its narrow end resting on the belt 12, as shown in Figures 9 and 10. That is, the shorter transverse axis x-y of the bale lies transversely of the cradle 25 while the longer longitudinal axis z-z is disposed substantially vertically, and substantially perpendicular to the conveyor floor, as shown in Figure 9.

The rollers 35, 36 constrain the bale 24 so that it stands upright in its endwise disposition. The horizontal rollers 35 prevent the bale from twisting about a vertical axis, while the vertical roller 36 prevents the lower ends of the bale from kicking sideways.

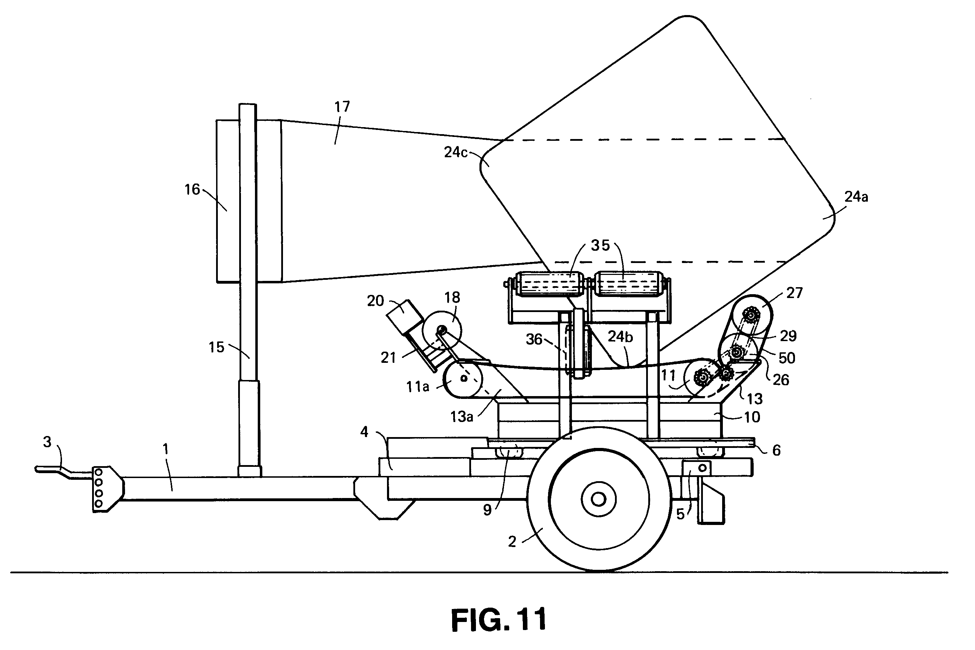

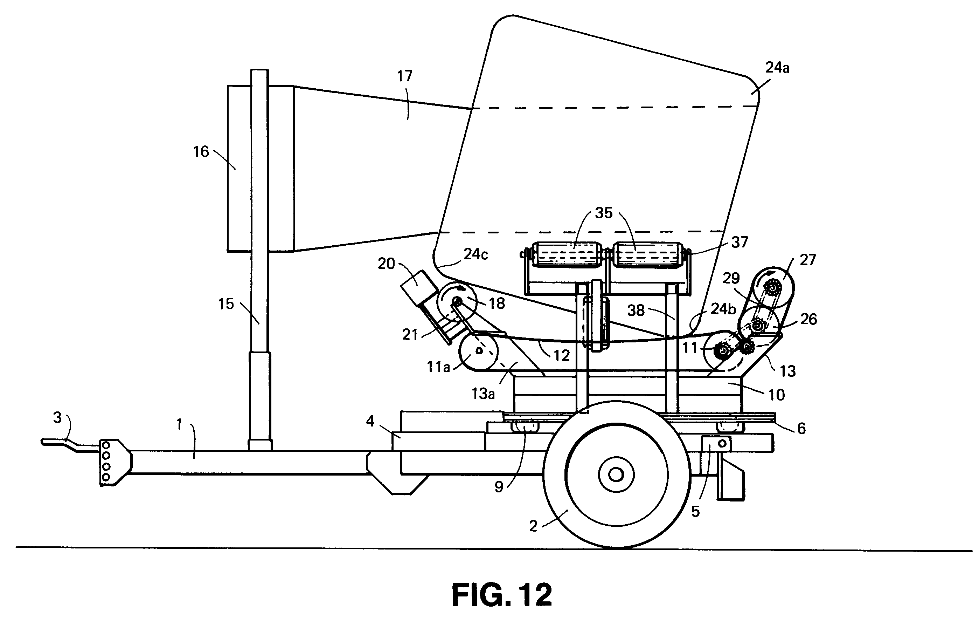

The turntable is then rotated clockwise. This causes the bale 24 to commence wrapping the film 17 around itself. Rotation of the turntable 6 about a vertical axis is continued, and simultaneously the indexing mechanism causes the belt 12 to advance. As the belt 12 moves in the direction of the arrow shown in Figure 10, the leading corner 24a of the bale 24 is advanced against the rotating rollers 11, 26 and 27. With continuing rotation, the corner 24a of the bale rises up along the rollers 11, 26, 27 to the position shown in Figure 11. In this position the trailing corner 24b of the bale is resting on the belt 12. It will be appreciated that the sag in the belt 12, mentioned above, into which the corner 24b sits, is of importance to ensure continuing contact between the corners, and ends, of the bale 24 and the belt to ensure the control and continuing advancing of the bale in the direction of the arrow shown in Figure 9. As the bale advances towards the position shown in Figure 12, the turntable 6 continues to rotate and the bale is continually being wrapped with plastics film 17 from the roller 16.

From the position shown in Figure 11, the combined force of gravity and the pull on the wrapping film 17 causes the bale 24 to topple, in a controlled manner, over onto its narrow end to the position shown in Figure 12.

In this position, the corner 24c of the bale, which is disposed diagonally opposite the leading corner 24a rests on the driven roller 18. The corner 24b is in contact with the belt 12 and is advanced towards the rollers 11, 26 and 27. Simultaneously, the corner portion 24c of the bale is in contact with the driven roller 18 which moves intermittently, in the direction of the arrow shown in Figure 12, in step with the conveyor belt 12. The roller 18 thus urges the corner 24c downwardly onto the conveyor belt 12. This is important to prevent the bale from becoming stuck in the position shown in Figure 12. Thus, the bale again stands vertically on the belt 12 as shown in Figure 13. By this stage, the bale has been turned through substantially 180° about the horizontal axis x-y, while simultaneously the turntable 6 has rotated the bale about a vertical axis. In practice, this is usually sufficient to fully wrap the bale with up to 4 plies of film. However, if any portion of the bale is found to be uncovered, the process described above can be continued until the bale is fully wrapped.

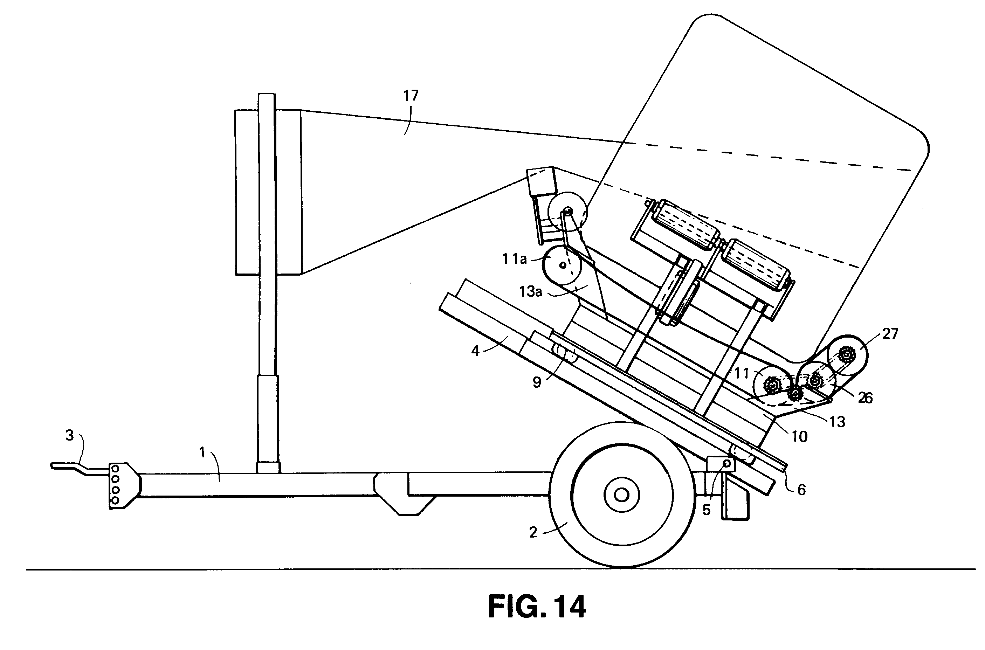

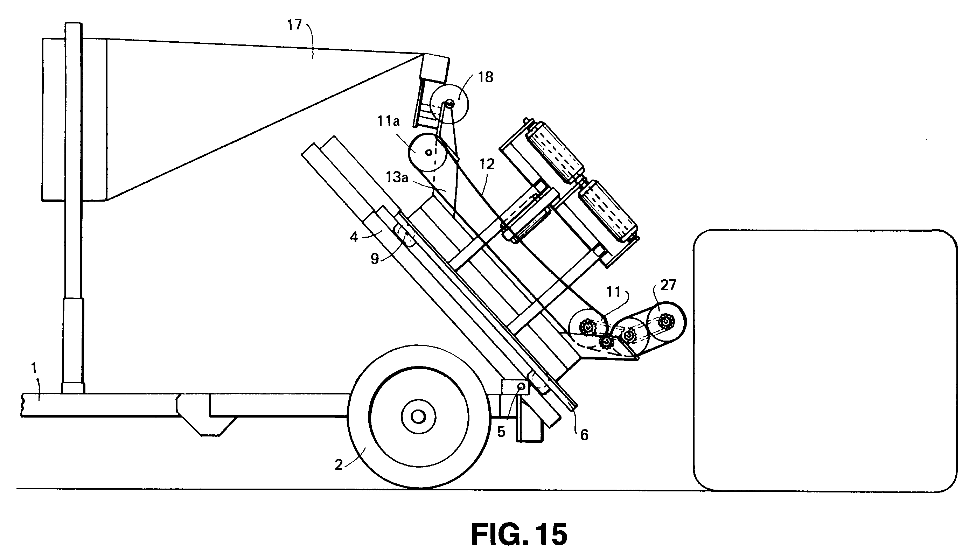

When the bale 24 has been fully wrapped the turntable 6 is stopped with the film handling device 20 facing the front of the machine, as shown in Figure 13. As the tipping platform 4 is raised, as shown in Figure 14 the film handling device 20 gathers up the film 17 and cuts the film. In a fully-tipped position of the platform 4, as shown in Figure 15, the bale is tipped over the end roller 27.

It will be appreciated that modifications may be made to the bale wrapping machine of the invention without departing from the scope of the invention. For example, the conveyor belt 12 could be replaced by a plurality of rollers. Likewise, the inclined bale contacting rollers 11, 26 and 27 could be replaced by other suitable conveying means such as a suitably configured belt.

As described above a plurality of belts 50 (see Figs. 9, 16 and 20) which fit around the rollers 26, 27 may be provided. These have the purpose of assisting the corner of the bale in rising up along the rollers. The belts also prevent the corners of the bale from jamming between the rollers. To assist in unloading the wrapped bale the top roller 27 may free-wheel in the direction of the arrow shown in Figure 13. The slack in the belts permit this rotation.

The machine of the invention may also be used to wrap conventional round bales. For this purpose, the rollers 35, 36 may be removed to improve access to the cradle 25. The tension in the belt 12 may also be adjusted.

A loading device of the invention for loading rectangular bales onto the conveyor floor 12 of the bale wrapping machine is now described with reference to Figures 20 to 26 of the accompanying drawings.

The loading device 70 for lifting a rectangular (or square) bale 14 from the ground onto the turntable 6 of the bale wrapping machine is shown in Figure 20, attached to and positioned alongside the bale wrapping machine.

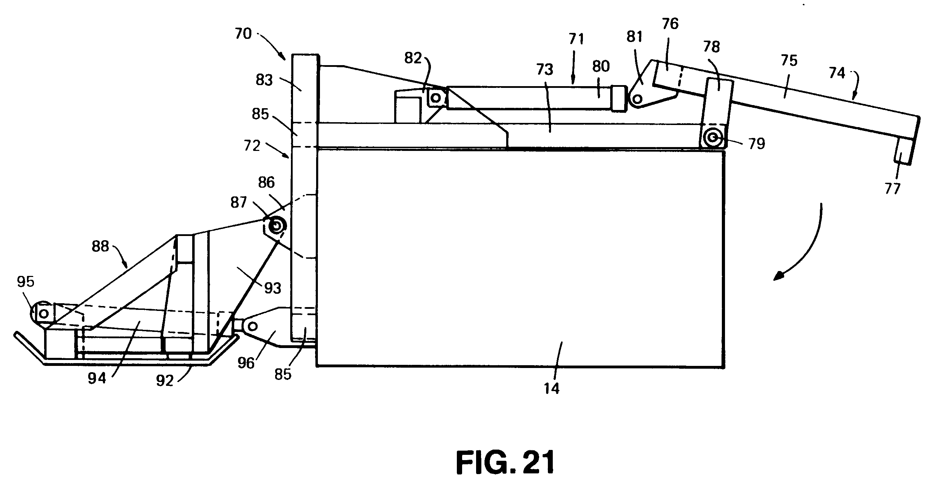

The loading device 70 is shown more clearly in Figure 21, and comprises a bale pick-up means 71.

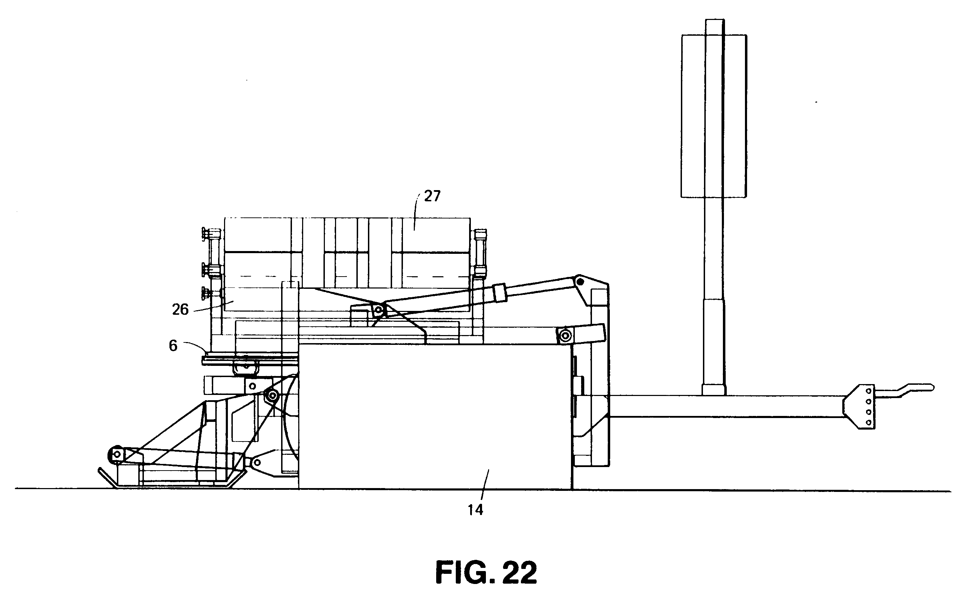

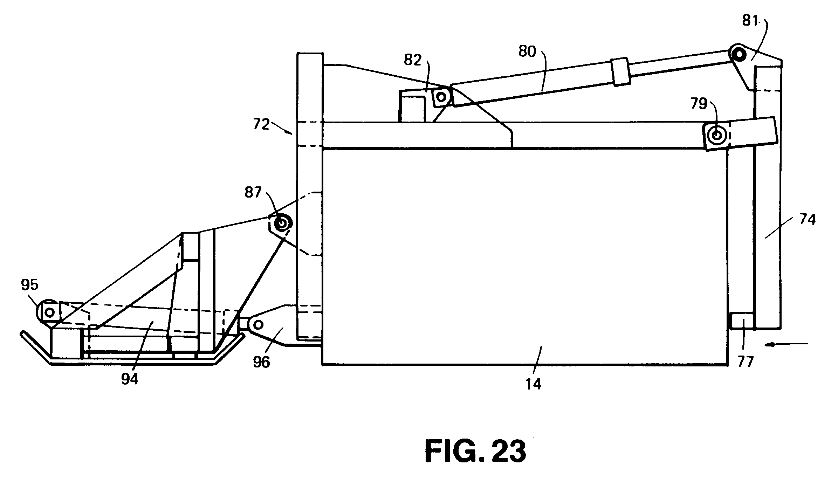

The bale pick-up means 71 comprises a rear rectangular frame member 72 and, at right angles thereto, a top frame member 73. A rectangular gripping frame 74 comprises a pair of parallel side members 75, a top cross-member 76 and a bottom cross-member 77. Each side member 75 has a bracket 78 attached thereto adjacent the top end of the frame member. The brackets 78 are pivotally attached by pivots 79 to the forward end of the top frame member 73, such that the gripping frame may pivot in the direction of the arrow shown in Figure 21. A hydraulic ram 80 is pivotally connected between a bracket 81 attached to the top cross-member 76 and a bracket 82 attached to the top frame member 78. The ram 80 is shown in the closed position in Figure 21 but extension of the ram, as shown in Figures 22 and 23, causes the gripping frame to move in the direction of the arrow shown in Figure 21.

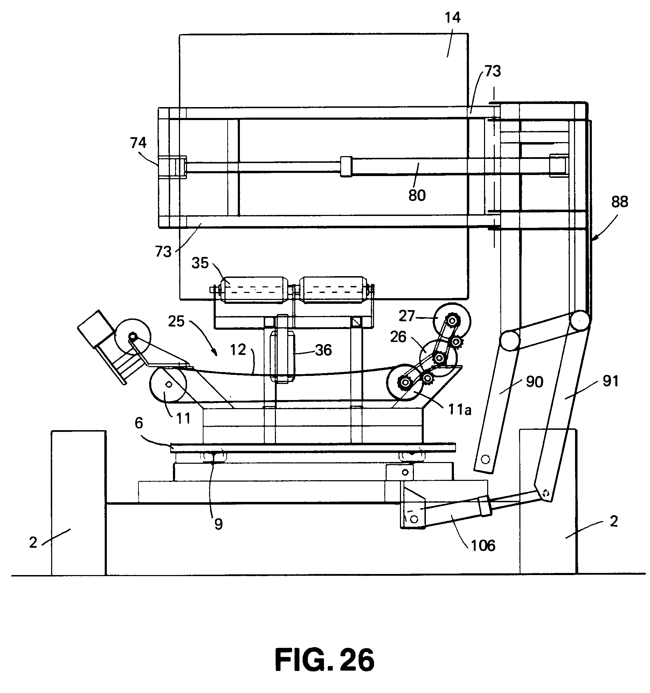

The rear rectangular frame member comprises a pair of spaced parallel uprights 83 connected by transverse members 84 and 85. Each upright member 83 has a rearwardly extending bracket 86 positioned approximately mid-way of the upright member 83. Each bracket 86 carries a main pivot 87. The bale pick-up means 71 is pivotally connected through the main pivot 87 to a support structure 88. The support structure itself is carried by support arms 90, 91 (as best seen in Figure 26) which are pivotally connected between the chassis of the bale wrapping machine and the support structure 88.

The support structure 88 comprises a ground-engaging skid 92 on which is carried a support frame having a pair of oppositely arranged plates 93 (Fig. 21). Each plate 93 is pivotally connected to the main pivot 87. A hydraulic ram 94 is positioned between the plates 93 and is pivotally connected between a pivot plate 95 on the frame of the support structure 88 and a bracket 96 attached to the lower transverse member 85 of the bale pick-up means 71.

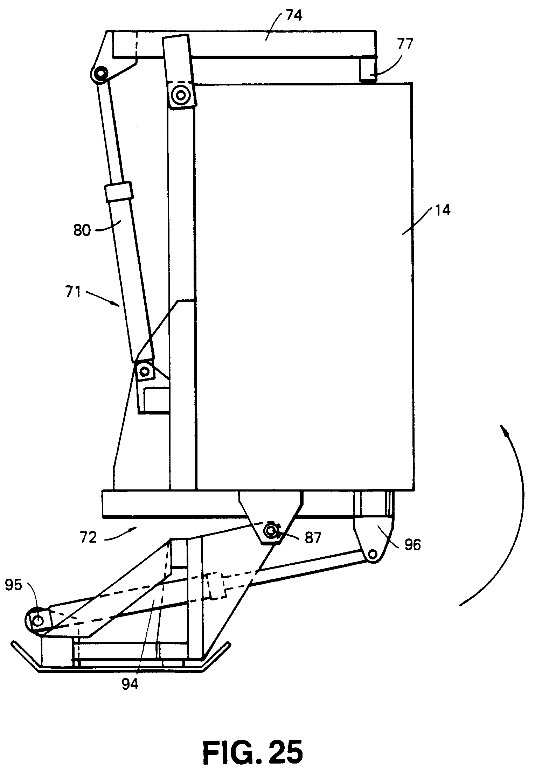

The hydraulic ram 94 is shown in a closed position in Figure 21 but when the ram is extended this will cause the bale pick-up means 71 to pivot, through approximately 90°, upwardly in the direction of the arrow shown in Figure 25.

A pair of guide rails may be positioned between the pick-up means 71 and the bale-wrapping machine to assist in guiding the bale 14 into the pick-up means.

The operation of the loading device 70 is now described. Assuming that a bale of fodder 14 (such as silage) is deposited by a baling machine on the ground, the loading device 70 is positioned, as shown in Figures 20 and 21 such that the bale fits between rear rectangular frame member 72 and the top member 73, with the rear of the bale abutting the member 72. The ram 80 is then actuated to cause the gripping frame 74 to move in the direction of the arrow shown in Figure 21. As will be seen in the drawings, the bottom cross-member 77 protrudes from the frame 74 and engages with the front end of the bale. The ram 80 causes the cross-member 77 to press firmly into the bale so as to grip the bale tightly. This gripping motion causes the bale 14 to arch upwardly which aids in securing the bale in the pick-up means.

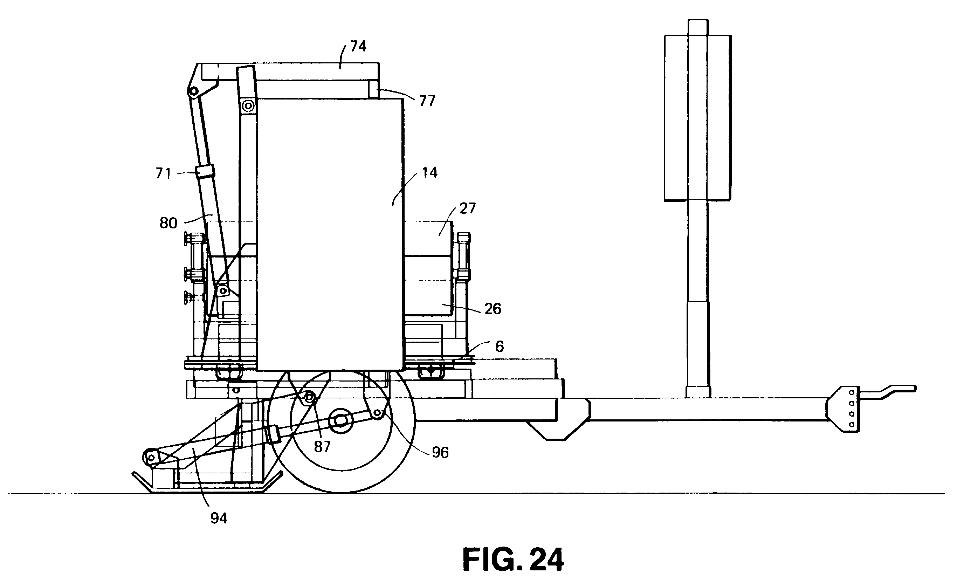

The hydraulic ram 94 is then extended as shown in Figures 24 and 25. This causes the pick-up means 71 containing the bale 14 to swing upwardly about the main pivot 87 through substantially 90° in a first vertical plane to the position as shown in Figures 24 and 25. In this position, the bale is located adjacent the cradle 25 of the bale wrapping machine. The turntable 6 of the bale wrapping is positioned such that the conveying rollers 26, 27 are facing the bale 14.

As shown in Figure 26, the support arm 90 is pivotally connected between the support structure 88 and the chassis of the bale wrapping machine. The second support arm 91 is pivotally connected at one end to the support structure 88 and at the other end to the piston of a hydraulic ram 106. The cylinder of the ram 106 is pivotally connected to the chassis of the bale wrapping machine. After the bale 14 has been raised to the position as shown in Figure 25 the hydraulic ram 106 is then extended as shown in Figure 26. This causes the bale pick-up means 71 to pivot inwardly, through substantially 90° in a plane substantially normal to the first plane, such that the bale 14 is positioned above the cradle 25 of the bale wrapping machine, as shown in Figure 26.

The ram 80 is then withdrawn to release the gripping frame 74 from the bale. The bale is thus free to fall into the cradle 25 of the bale wrapping machine onto the conveyor floor, with a long side of the bale extending vertically. After depositing the bale onto the conveyor floor the loading device 70 assumes the position shown in Figure 9.

It will be appreciated that modifications may be made to the bale loading device without departing from the scope of the invention. For example, the pick-up means could be provided with two opposed gripping jaws which act in pincer fashion. Also, the pick-up device may be provided, opposite the top frame 73, with a pair of forks which fit under the bale 14 to assist in the lifting movement.

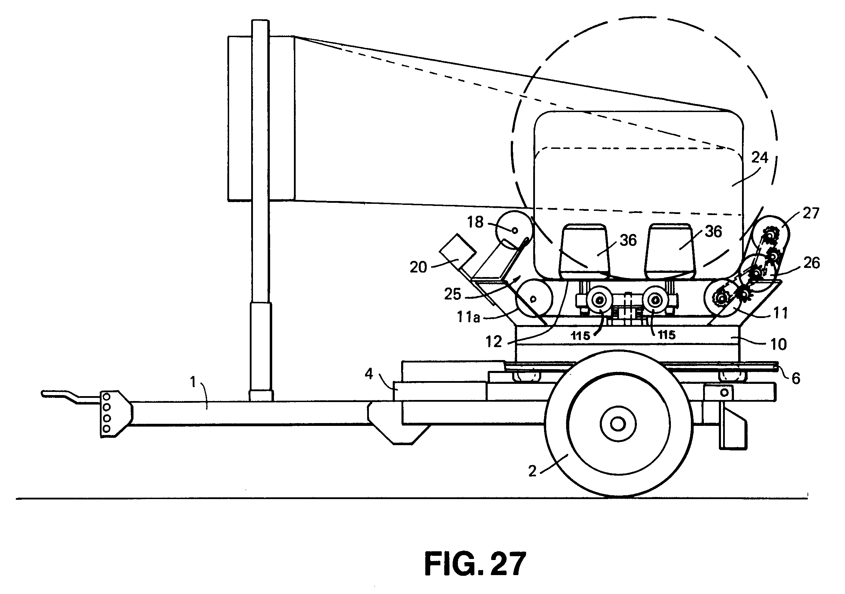

A second embodiment of a bale wrapping machines of the invention, shown in Figures 27 to 29, is a modification of that shown in Figure 9, and like reference numerals denote like parts. However, this embodiment is intended for use in wrapping a wide variety of rectangular and square bales, and also round bales. Thus, it is suitable for wrapping bales of the "square" type referred to above, including:
a) Ford-New Holland D1000 bales up to 1.35 m in length.
b) Hesston 4700 bales and equivalents having a length of 1.35 m, a width of 0.8 m and a depth of 0.8 m.
c) Hesston 4600 bales, wrapped in pairs, each bale having a length of 1.35 m, a width of 0.8 m and a depth of 0.4 m.
d) Welger Delta 4000, and
e) Mengele SB 8580

This embodiment is also suitable for wrapping all makes of round bales. In Figure 27, the bale shown in full lines is typical of a Hesston bale, while that shown in broken lines is typical of a Ford New Holland bale.

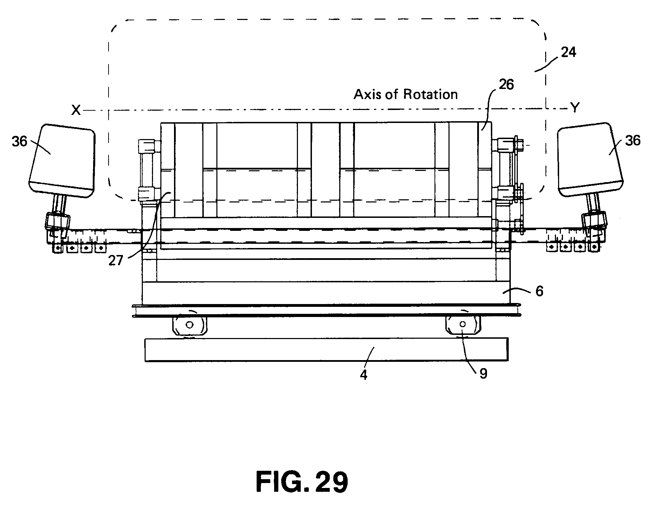

With this embodiment, the square bales referred to above may be rotated about their longitudinal axes, that is about the line x-y shown in Figure 29.

The main constructional differences between this embodiment and that described previously is that the driven roller 18 is moved inwardly of the cradle 25 in the direction of the roller 27, that is the driven roller 18 is located substantially vertically above the roller 11a. Thus, the distance between the driven roller 18 and the driven roller 27 is less than that with the previous embodiment.

As shown in Figures 27 to 29 a pair of spaced restraining rollers 35, 36 is provided for each lateral side of the cradle 25. These rollers preferably are of conical shape. These conical rollers 35, 36 are each rotatably mounted on an upright bearing 37 which is carried by a T-shaped bracket 38 fixed to the superstructure 10. The pairs of conical rollers 35, 36 to each side of the turntable are inclined from the vertical inwardly towards each other as best shown in Figure 29. The purpose of these conical rollers is to restrain the bale of fodder 24 within the cradle during the wrapping process. The lateral spacing of the rollers can be adjusted, that is the pair of rollers 35, 36 on one side of the turntable may be moved towards or away from the pair of rollers on the opposite side, as indicated in Figure 29.

In this embodiment, the conveyor belt 12 preferably is supported mid-way by means of a pair of support rollers 115 which are located immediately below the conveyor floor. The support rollers are journal led for free rotation, and extend transversely of the turntable 6, parallel to and substantially midway between the rollers 11, 11a.

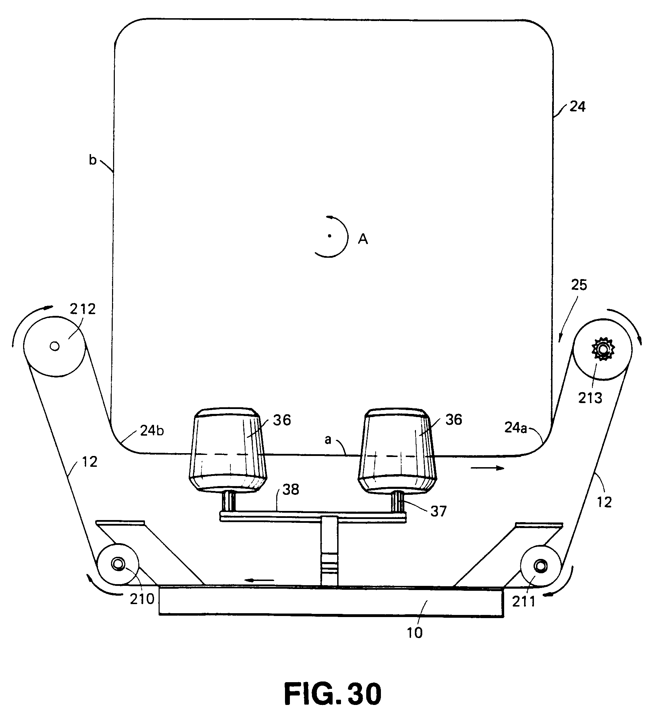

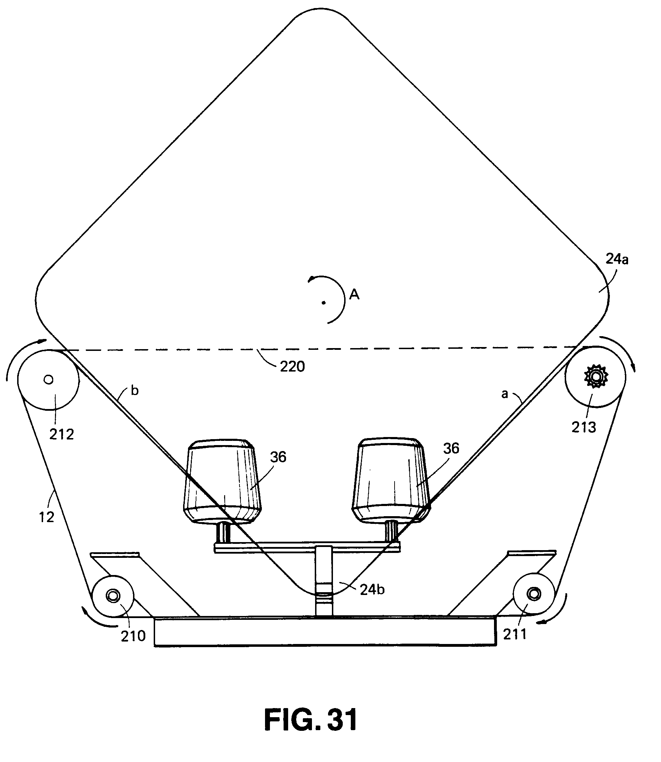

A third embodiment as shown in Figures 30 to 34 is a development of the embodiments described above, and is particularly suitable for wrapping large rectangular bales of the Claas and Deutz Fahr type. The turntable 6 and other components of the machine are as described in relation to the embodiments of Figures 9 to 26 and 27 to 29 and, where appropriate, like numerals denote like parts. It is the arrangement of the machine above the superstructure 10 which differs. In this arrangement, the bale 24 is turned about its transverse axis by an endless belt 12 which travels around four rollers. These rollers comprise two lower idler rollers 210, 211, and two upper rollers, 212, 213. In this embodiment upper roller 213 is driven by a suitable chain and sprocket arrangement. Roller 212 is an idler roller but can be driven if required. There is considerable slack in the belt 12 so that when a bale 24 is placed on the upper bale-carrying surface of the belt 12 the belt assumes a substantially u-shape as shown in Figure 30, or a substantially v-shape as shown in Figure 31, depending upon the disposition of the bale. Thus, at all times, there is at least some upward travel of the belt 12, in an inclined direction towards the roller 213. This assists in turning the bale about its axis A. The downward inclination of the belt from roller 212 also assists the turning of the bale.

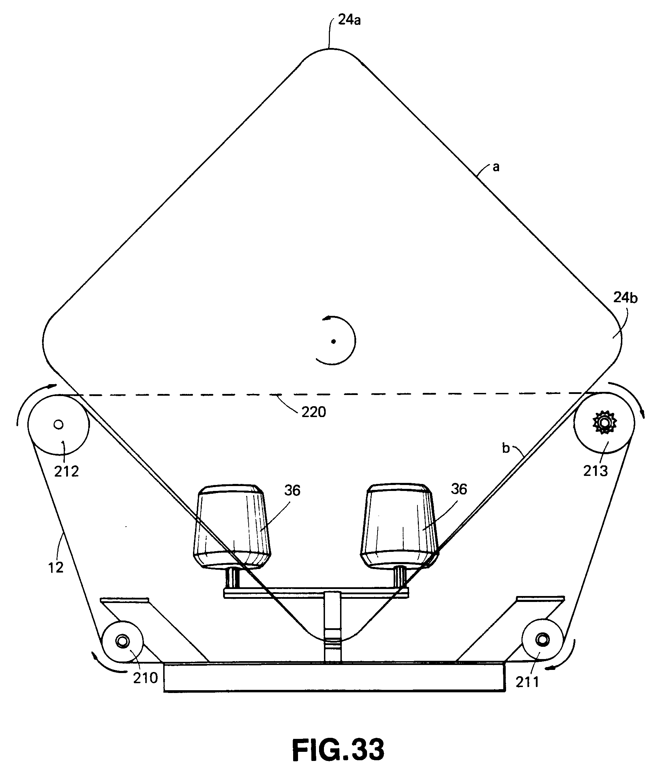

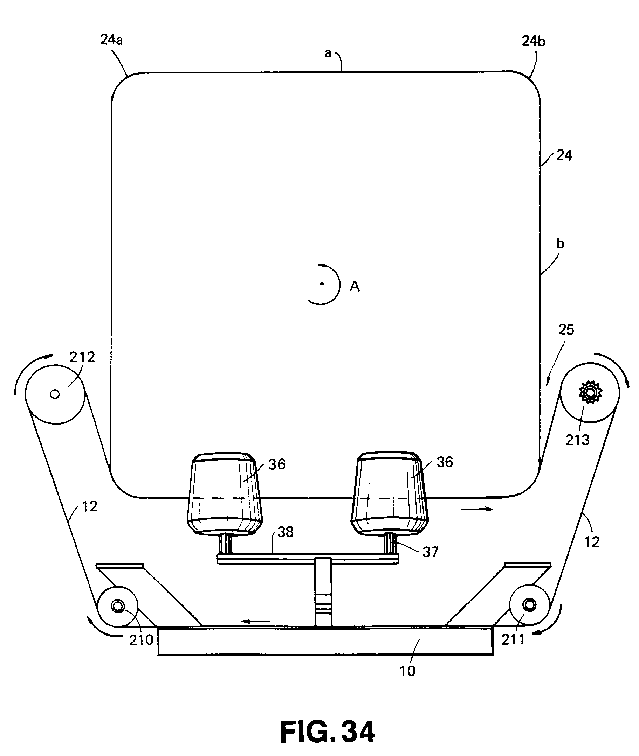

When a bale is placed on the belt 12 with a flat side of the bale resting on the belt, the belt assumes the shape shown in Figure 30 and, it will be seen that the belt wraps around the opposite corners 24a, 24b of the bale 24. This causes the leading corner 24a of the bale to rise up along the inclined path of the belt 12 towards roller 213. It also assists in causing the trailing corner 24b to follow, thus controlling more securely the movement of the bale. As the leading corner 24a reaches the position shown in Figure 31, the trailing corner 24b will have reached the lowermost point of the path of travel of the bale. In this position the top part of the belt 12 assumes a v-shape. Also in this position, the sides a, b of the bale rest on the rollers 212, 213 respectively. The corner 24b then begins to travel up the inclined path of the belt 12 towards the roller 213 so that the bale again rests with a flat side on the belt 12. Figures 33 and 34 show the next stages of movement of the bale 24 about the axis A. When it has reached the position shown in Figure 34 the bale has been turned through 180°.

It will be appreciated with this embodiment that the bale is always under control during its rotational movement and does not need to be toppled as with the other embodiments described above.

The positioning of the rollers 212, 213 is of importance. Thus, the distance between these rollers must be wider than the transverse axis of the bale so that the bale can fit between the rollers when it is in the position shown in Figure 30. However, the distance between the rollers 212, 213 should not exceed the length of the diagonal axis of the bale 24, such that when the bale is in the position shown in Figure 31 more than half the surface area of the bale is disposed above the rollers 212, 213 to ensure full wrapping of the bale. In other words, the centre A of the bale should always be above an imaginary horizontal line joining the tops of the rollers 212, 213 (shown as 220 in drawing).

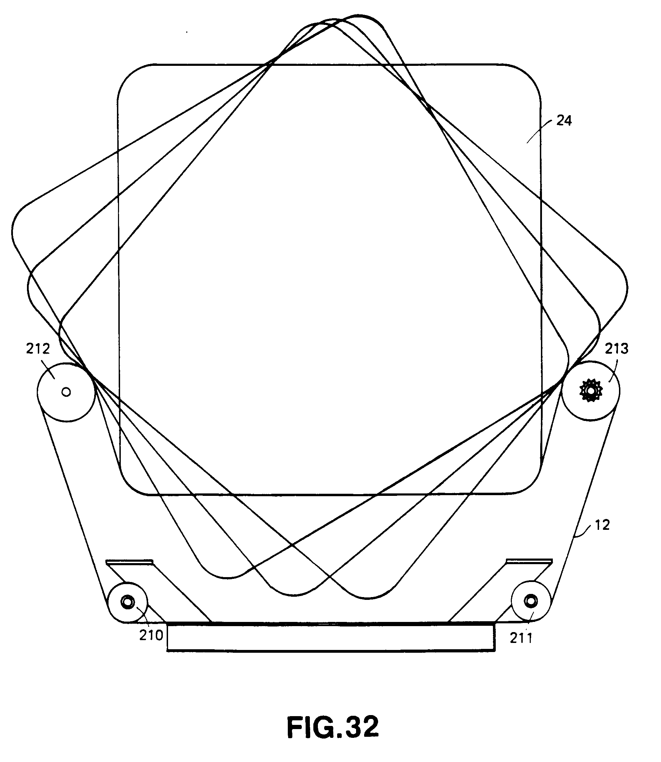

Figure 32 illustrates the various dispositions of the bale 24 as it moves around the axis A. It will be seen from this drawing that the distance between the rollers 212, 213 is 1520 mm while the vertical distance between the rollers 212, 213 and the respective rollers 210, 211 is 600 mm. The overall length of the belt 12 is 5 m.

This embodiment has certain advantages over the first and second embodiments. Firstly, because of the improved contact between the belt 12 and the bale, a more controlled turning of the bale about its horizontal axis is achieved. Secondly, with the first and second embodiments there is a risk that if the bale is too big (e.g. too long in the case of the first embodiment, or too wide in the case of the second embodiment), there is a risk that the bale will jam between rollers 11 and 11a. This risk is avoided with the present embodiment.

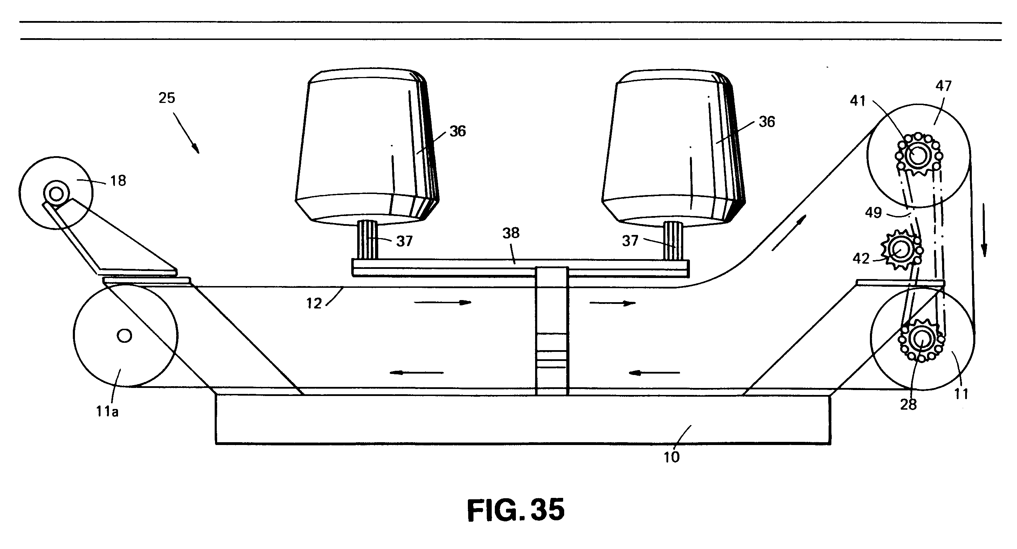

A fourth embodiment of bale wrapping apparatus is illustrated in Figure 35. Apart from the belt-drive arrangement the construction of the machine is similar to that described with reference to Figures 9 to 26 or Figures 27 to 29, and like reference numerals denote like parts.

However, in this embodiment the belt 12 forming the conveyor floor is not disposed in a substantially horizontal plane. Instead, the belt 12 is inclined upwardly from the idler roller 11a which is positioned substantially as with the first and second embodiments. From roller 11a the belt traverses the bed of the cradle 25 and is inclined upwardly to move around an upper driven roller 47 and then downwardly around a driven rear belt roller 11, from where it returns to idler belt roller 11a. The roller 47 is located above and spaced from the roller 11.

As with the first and second embodiments, the rear belt roller 11 is driven from a powered shaft through the indexing mechanism which causes the belt 12 to advance, in intermittent stepwise manner, in the direction of the arrows shown in Figure 35, for each two revolutions of the turntable 6. The drive from the indexing assembly is transmitted by a chain and sprocket mechanism to the end of the drive roller 11 on the side opposite to that shown in Figure 35.

A second driven belt roller 47 is positioned above and parallel with roller 11. The roller 47 is journalled in suitable bearings. Drive from roller 11 is transmitted by means of a sprocket 28, fitted to the end of roller 11, and a chain 49 to a sprocket 41 on the end of roller 47. A tensioning guide sprocket 42 for the chain 49 is also provided.

In this embodiment a rectangular or square bale to be wrapped is placed on the belt 12 in the manner described in relation to the first and second embodiments above. As the belt 12 moves in the direction of the arrows, the leading corner 24a of the bale 24 rises up along the inclined path of belt 12 towards roller 47. Preferably, the belt 12 has an outer surface which is ribbed or otherwise configured to improve frictional contact between the surface of the belt 12 and the bale 24. The bale rises up along the path of belt 12 until it attains the position substantially as shown in Figure 11 of the first embodiment, with the inclined surface of the bale resting on the roller 47, and the trailing corner 24b in contact with a sagged portion of the belt 12. The bale continues to turn substantially as shown in previous Figures 12 and 13, and is tipped as shown in Figures 14 and 15.

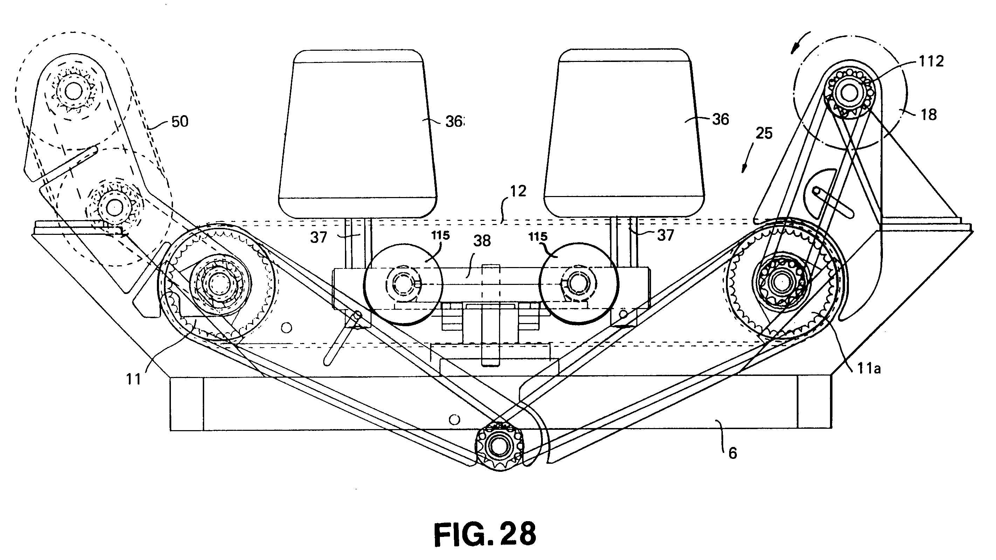

Thus, in this embodiment the upwardly inclined conveyor belt 12 acts as the means for imparting an upward motion to a leading edge portion of the bale. The roller 18 may be a driven roller as described above, to impart a downward motion to the bale. The drive arrangement for the rollers 11, 11a and 18 may be as described with either of Figures 16 or 28.

## Claims

1. Apparatus for wrapping a large rectangular or square bale (24) of fodder with a strip of wrapping material (17), comprising a support (6) which is adapted to support the bale (24), conveying means including a substantially horizontally-disposed conveyor floor on said support adapted to turn the bale (24) about a substantially horizontal axis, means (16) for continuously supplying a strip of wrapping material (17) to the bale (24) as the bale (24) is turned through said axis to wrap the wrapping material (17) around the bale (24), wherein the conveying means includes driven means (11, 26, 27) inclined upwardly at one end of the conveyor floor (12) for imparting an upward motion, in a path inclined upwardly from the upper surface of the conveyor floor (12), to a leading portion of the bale (24), and a roller (18) located at the opposite end of the conveyor floor (12), whereby the bale (24) is turned about a horizontal axis of the bale (24), characterised in that the roller (18) includes drive means (108, 110, 111) for driving said roller (18), such that when the bale (24) is in contact with said roller (18), the roller (18) imparts a downward motion to a trailing portion of the bale (24).

2. Apparatus as claimed in Claim 1, characterised in that the driven means for imparting an upward motion to a leading portion of the bale (24) comprises a plurality of driven rollers (11, 26, 27) disposed in parallel arrangement in an array which is inclined upwardly from the substantially horizontally-disposed conveyor floor (12).

3. Apparatus as claimed in Claim 1 or 2, characterised in that the conveying means includes a conveyor belt (12), disposed substantially horizontally on the floor of the support which is a turntable (6), and is rotatable about two rollers (11, 11a) extending transversely of the turntable (6) and located to the front and rear respectively of the turntable (6), and wherein there is a sag in the belt (12), the sag being between 65 to 85 mm below the horizontal.

4. Apparatus as claimed in Claim 1 characterised in that the driven means for imparting an upward motion to a leading portion of the bale (24) comprises a conveyor belt (12) extending upwardly from the conveyor floor and inclined at an angle to the horizontal.

5. Apparatus as claimed in Claim 4 characterised in that the conveyor belt (12) is driven between a first roller (11a) disposed transversely of the turntable (6) at a one end of the turntable (6), and a second roller (47) disposed parallel to the first roller at the other end of the turntable (6) and displaced to rotate in a substantially horizontal plane disposed above the plane of rotation of said first roller (11a).

6. Apparatus for wrapping a large rectangular or square bale (24) of fodder with a strip of wrapping material (17), comprising a support (6) which is adapted to support the bale (24), conveying means to turn the bale (24) about a substantially horizontal axis, and means (16) for continuously supplying a strip of wrapping material to the bale (24) as the bale (24) is turned through said axis to wrap the wrapping material (17) around the bale (24), and the conveying means comprises a slack endless conveyor belt (12) suspended above the support (6) and includes drive means (213) for the belt (12) such that a first portion of the belt travels upwardly in an upwardly inclined path at one end of the support (6) while a second portion of the belt (12) travels downwardly in a downwardly inclined path at an opposite end of the support (6), characterised in that the endless conveyor belt (12) has a substantial sag in the conveyor belt (12) which defines a cradle in the belt to receive the bale (24) and is adapted to assume a substantially u-shape or v-shape when a bale (24) is placed on the belt (12), the sag in the belt (12) being such that there is contact between the belt (12) and adjoining sides of the bale (24) during rotation of the bale (24) which maintains control of the rotational movement of the bale (24) as the bale (24) is turned about a horizontal axis of the bale (24).

7. Apparatus as claimed in Claim 6, characterised in that the conveyor belt (12) is suspended from two parallel rollers (212, 213) spaced above the support which may comprise a turntable (6), one roller being located at one end of the turntable (6) and the other at the other end of the turntable (6), and wherein at least one of said rollers (213) is driven to cause the belt (12) to travel about said rollers (212, 213).

8. Apparatus as claimed in Claim 6 wherein the belt (12) travels about four rollers (210, 212, 213, 211) comprising two lower rollers (210, 211) disposed transversely of the turntable (6) and located forwardly and rearwardly of the turntable (6) respectively, and two upper rollers (212, 213) spaced above and parallel to the lower rollers (210, 211), and wherein at least one of said upper rollers (213) is a driven roller.

9. Apparatus as claimed in any of the preceding claims, characterised in that the turntable is provided with upwardly extending restraining members (35, 36) which are adapted to restrain side displacement of a bale (24) supported on the turntable (6).

10. Apparatus as claimed in any of the preceding claims characterised in that drive means for the conveying means (12) is adapted to cause the conveying means (12) to move in an intermittent stepwise manner.

11. Apparatus as claimed in any of the Claims 1 to 10, characterised in that it includes a loading device (70) for loading bales (24) onto the support comprising a turntable (6) of the bale wrapping machine, the device comprising gripping means (71) for gripping the bale (24), a lifting means (94) for lifting the gripping means (71) upwards through an arc of substantially 90° in a first substantially vertical plane, and means (106) for moving the elevated gripping means (71) through a further arc of substantially 90° in a second substantially vertical plane which is substantially normal to said first plane.

12. Apparatus as claimed in Claim 11, characterised in that the gripping means (71) comprises at least one pivotally-operated gripping arm (74) which is adapted to grip the bale.

13. Apparatus as claimed in Claim 11, characterised in that the gripping means (71) includes a frame (72, 73) which is adapted to fit around the top and sides of the bale (24), the gripping arm (74) being attached to one end of the frame (73) and adapted to squeeze the bale (24) between said arm (74) and an end wall (72) of the frame.

14. Apparatus as claimed in Claim 13 characterised in that the gripping arm (74) is pivotally mounted on the frame (73) and operated by means of a hydraulic ram (80).

15. A method of wrapping large bales (24) of fodder of substantially rectangular or square shape with a strip of wrapping material (17) which includes the steps of :
a) placing the bale (24) on a support with a shorter transverse axis of the bale (24) disposed transversely of the support and a larger longitudinal axis disposed substantially upright of the support, the support comprising an endless conveyor belt (12),
b) attaching a free end of a supply of said wrapping material (17) to a surface of the bale (24),
c) driving the conveyor belt (12) to advance a leading corner portion (24a) of the bale (24) upwardly from the horizontal along an inclined path to incline the longitudinal axis of the bale from a substantially vertical position to an inclined position, and simultaneously advancing a trailing corner portion (24b) of the bale along a downwardly inclined path,
d) advancing the trailing corner (24b) of the bale (24) along an upwardly inclined path while a following corner of the bale (24) is advanced along a downwardly inclined path, and continuing the advancement to rotate the bale (24) about its transverse axis,
characterised in that the belt (12) has a substantial sag which assumes a substantially u-shape or v-shape as the bale is advanced along said inclined paths, and including the additional step of:
e) controlling the rotational movement of the bale (24) by cradling the bale (24) in the substantial sag in the belt (12) and by maintaining contact between the belt (12) and at least two adjoining sides of the bale (24).

## Patentansprüche

1. Vorrichtung zum Umhüllen eines großen quader- oder würfelförmigen Futterballens (24) mit einem Streifen aus Umhüllungsmaterial (17), mit einem Gestell (6) zum Abstützen des Ballens (24), einer Fördereinrichtung, die einen auf dem Gestell im wesentlichen horizontal angeordneten Förderboden zum Drehen des Ballens (24) um eine im wesentlichen horizontale Achse aufweist, einer Einrichtung (16) zum fortwährenden Zuführen eines Streifens aus Umhüllungsmaterial (17) zu dem Ballen (24), wenn der Ballen (24) um die genannte Achse gedreht wird, um das Umhüllungsmaterial (17) um den Ballen (24) zu wickeln, wobei die Fördereinrichtung an einem Ende des Förderbodens (12) nach oben geneigte, angetriebene Mittel (11, 26, 27), um einem voreilenden Abschnitt des Ballens (24) eine nach oben gerichtete Bewegung längs eines von der Oberfläche des Förderbodens (12) schräg nach oben geneigten Weges zu verleihen, und eine Walze (18) einschließt, die an dem gegenüberliegenden Ende des Förderbodens (12) angeordnet ist, wodurch der Ballen (24) um eine horizontale Achse des Ballens (24) gedreht wird,
dadurch gekennzeichnet, daß die Walze (18) eine Antriebseinrichtung (108, 110, 111) zum Antreiben der Walze (18) aufweist, so daß dann, wenn der Ballen (24) in Berührung mit der Walze (18) ist, die Walze (18) einem nacheilenden Abschnitt des Ballens (24) eine nach unten gerichtete Bewegung verleiht.

2. Vorrichtung nach Anspruch 1,
dadurch gekennzeichnet, daß die angetriebenen Mittel, die einem voreilenden Abschnitt des Ballens (24) eine nach oben gerichtete Bewegung verleihen, eine Vielzahl angetriebener Rollen (11, 26, 27) aufweisen, die in paralleler Anordnung in einem Feld angeordnet sind, das von dem im wesentlichen horizontal angeordneten Förderboden (12) schräg nach oben geneigt ist.

3. Vorrichtung nach Anspruch 1 oder 2,
dadurch gekennzeichnet, daß die Fördereinrichtung ein Förderband (12) einschließt, das im wesentlichen horizontal auf dem Boden des Gestells, welches ein Drehtisch (6) ist, angeordnet und um zwei Rollen (11, 11a) drehbar ist, die sich quer von dem Drehtisch (6) erstrecken und vor bzw. hinter dem Drehtisch (6) befinden, und wobei das Band (12) einen Durchhang aufweist, welcher zwischen 65 und 85 mm unterhalb der Horizontalen ist.

4. Vorrichtung nach Anspruch 1,
dadurch gekennzeichnet, daß die angetriebenen Mittel, die einem voreilenden Abschnitt des Ballens (24) eine nach oben gerichtete Bewegung verleihen, ein sich von dem Förderboden nach oben erstreckendes und unter einem Winkel zur Horizontalen geneigtes Förderband (12) umfassen.

5. Vorrichtung nach Anspruch 4,
dadurch gekennzeichnet, daß das Förderband (12) zwischen einer ersten Rolle (11a), die an einem Ende des Drehtisches (6) quer zu dem Drehtisch (6) angeordnet ist, und einer zweiten Rolle (47), die an dem anderen Ende des Drehtisches (6) parallel zu der ersten Rolle angeordnet ist, angetrieben und verschoben wird, um in einer im wesentlichen horizontalen Ebene oberhalb der Rotationsebene der ersten Rolle (11a) zu rotieren.

6. Vorrichtung zum Umhüllen eines großen, quader- oder würfelförmigen Futterballens (24) mit einem Streifen aus Umhüllungsmaterial (17), mit einem Gestell (6) zum Abstützen des Ballens (24), einer Fördereinrichtung zum Drehen des Ballens (24) um eine im wesentlichen horizontale Achse, und einer Einrichtung (16) zum fortwährenden Zuführen eines Streifens aus Umhüllungsmaterial zu dem Ballen (24), wenn der Ballen (24) um die genannte Achse gedreht wird, um das Umhüllungsmaterial (17) um den Ballen (24) zu wickeln, wobei die Fördereinrichtung ein oberhalb des Gestells (6) aufgehängtes, lockeres, endloses Förderband (12) aufweist, und eine Antriebseinrichtung (213) für das Band (12) umfaßt, so daß ein erster Abschnitt des Bands an einem Ende des Gestells (6) sich längs eines schräg nach oben geneigten Weges nach oben bewegt, während ein zweiter Abschnitt des Bands (12) an einem gegenüberliegenden Ende des Gestells (6) sich längs eines schräg nach unten geneigten Weges nach unten bewegt,
dadurch gekennzeichnet, daß das endlose Förderband (12) einen deutlichen Durchhang im Förderband (12) aufweist, der einen Trog in dem Band zum Aufnehmen des Ballens (24) bildet und der eine im wesentlichen U-förmige oder V-förmige Gestalt annehmen kann, wenn ein Ballen (24) auf das Band (12) gelegt wird, wobei der Trog in dem Band (12) derart ist, daß während einer Drehung des Ballens (24) eine Berührung zwischen dem Band (12) und benachbarten Seiten des Ballens (24) stattfindet, was die Drehbewegung des Ballens (24) unter Kontrolle hält, wenn der Ballen (24) um eine horizontale Achse des Ballens (24) gedreht wird.

7. Vorrichtung nach Anspruch 6,
dadurch gekennzeichnet, daß das Förderband (12) an zwei parallelen Rollen (212, 213) aufgehängt ist, die oberhalb des Gestells, welches einen Drehtisch (6) aufweisen kann, mit Abstand angeordnet sind, wobei eine Rolle an einem Ende des Drehtisches (6) und die andere an dem anderen Ende des Drehtisches (6) angeordnet ist, und wobei zumindest eine der Rollen (213) angetrieben ist, um das Band (12) sich um die Rollen (212, 213) bewegen zu lassen.

8. Vorrichtung nach Anspruch 6,
bei der das Band (12) sich um vier Rollen (210, 212, 213, 211) bewegt, die zwei untere Rollen (210, 211), welche quer zu dem Drehtisch (6) angeordnet sind und sich vor bzw. hinter dem Drehtisch (6) befinden, und zwei obere Rollen (212, 213) umfassen, die mit Abstand oberhalb und parallel zu den unteren Rollen (210, 211) angeordnet sind, wobei zumindest eine der oberen Rollen (213) eine angetriebene Rolle ist.

9. Vorrichtung nach einem der vorhergehenden Ansprüche,
dadurch gekennzeichnet, daß der Drehtisch mit sich nach oben erstreckenden Rückhaltegliedern (35, 36) versehen ist, die eine seitliche Verschiebung eines auf dem Drehtisch (6) abgestützten Ballens (24) hindern können.

10. Vorrichtung nach einem der vorhergehenden Ansprüche,
dadurch gekennzeichnet, daß eine Antriebseinrichtung für die Transporteinrichtung (12) dazu vorgesehen ist, die Transporteinrichtung (12) in einer intermittierenden, schrittweisen Art zu bewegen.

11. Vorrichtung nach einem der Ansprüche 1 bis 10,
dadurch gekennzeichnet, daß sie eine Beladeeinrichtung (70) zum Laden von Ballen (24) auf das einen Drehtisch (6) umfassende Gestell der Ballenumhüllungsmaschine einschließt, wobei die Einrichtung eine Greifeinrichtung (71) zum Ergreifen des Ballens (24), eine Hubeinrichtung (94) zum Anheben der Greifeinrichtung (71) nach oben längs eines Bogens von im wesentlichen 90° in einer ersten, im wesentlichen vertikalen Ebene, und eine Einrichtung (106) zum Bewegen der angehobenen Greifeinrichtung (71) durch einen weiteren Bogen von im wesentlichen 90° in einer zweiten, im wesentlichen vertikalen Ebene aufweist, die im wesentlichen normal zu der ersten Ebene ist.

12. Vorrichtung nach Anspruch 11,
dadurch gekennzeichnet, daß die Greifeinrichtung (71) zumindest einen schwenkend betriebenen Greifarm (74) zum Ergreifen des Ballens aufweist.

13. Vorrichtung nach Anspruch 11,
dadurch gekennzeichnet, daß die Greifeinrichtung (71) einen Rahmen (72, 73) umfaßt, der um die Oberseite und die Seiten des Ballens (24) paßt, wobei der Greifarm (74) an einem Ende des Rahmens (73) befestigt ist und den Ballen (24) zwischen dem Arm (74) und einer Stirnwand (72) des Rahmens zusammendrücken kann.

14. Vorrichtung nach Anspruch 13,
dadurch gekennzeichnet, daß der Greifarm (74) schwenkbar an dem Rahmen (73) befestigt ist und mittels eines Hydropulsors (80) betrieben wird.

15. Verfahren zum Umhüllen großer Futterballen (24) von im wesentlichen quader- oder würfelförmiger Gestalt mit einem Streifen aus Umhüllungsmaterial (17), welches die Schritte aufweist:
a) Legen des Ballens (24) auf ein Gestell mit einer kürzeren Querachse des Ballens (24) quer zu dem Gestell und einer längeren Längsachse im wesentlichen aufrecht zu dem Gestell, wobei das Gestell ein endloses Förderband (12) umfaßt,
b) Befestigen eines freien Endes einer Zufuhr des Umhüllungsmaterials (17) an einer Oberfläche des Ballens (24),
c) Antreiben des Förderbands (12), um einen voreilenden Eckabschnitt (24a) des Ballens (24) aus der Horizontalen längs eines geneigten Weges nach oben zu bewegen, um die Längsachse des Ballens aus einer im wesentlichen vertikalen Stellung in eine schräge Stellung zu neigen, und gleichzeitiges Bewegen eines nacheilenden Eckabschnitts (24b) des Ballens längs eines nach unten geneigten Weges,
d) Bewegen der voreilenden Ecke (24b) des Ballens (24) längs eines nach oben geneigten Weges, während eine folgende Ecke des Ballens (24) längs eines nach unten geneigten Weges bewegt wird, und Fortführen der Bewegung, um den Ballen (24) um seine Querachse zu drehen,
dadurch gekennzeichnet, daß das Band (12) einen deutlichen Durchhang aufweist, der eine im wesentlichen U-förmige oder V-förmige Gestalt annimmt, wenn der Ballen längs der geneigten Wege bewegt wird, und mit dem zusätzlichen Schritt des
e) Kontrollierens der Drehbewegung des Ballens (24) durch Umfangen des Ballens (24) in dem deutlichen Durchhang des Bandes (12) und durch Aufrechterhalten einer Berührung zwischen dem Band (12) und zumindest zwei angrenzenden Seiten des Ballens (24).

## Revendications

1. Appareil d'emballage pour une grosse botte (24) rectangulaire ou carrée de fourrage avec une bande de matière d'emballage (17), comprenant un support (6) qui est destiné à supporter la botte (24), des moyens de transport incluant une base de transport disposée de manière essentiellement horizontale sur ledit support, destinés à faire tourner la botte (24) autour d'un axe essentiellement horizontal, des moyens (16) destinés à fournir de manière continuelle une bande de matière d'emballage (17) à la botte (24) lorsque la botte (24) est tournée à travers ledit axe pour enrouler la matière d'emballage (17) autour de la botte (24), dans lequel les moyens de transport incluent des moyens d'entraînement (11, 26, 27) inclinés vers le haut en une extrémité du plan de transport (12) destinés à impartir un mouvement vers le haut selon une trajectoire inclinée vers le haut depuis la surface supérieure du plan de transport (12) jusqu'à une portion avant de la botte (24), et un rouleau (18) situé à l'extrémité opposée du plan de transport (12), la botte (24) étant de ce fait tournée autour d'un axe horizontal de la botte (24), caractérisé en ce que le rouleau (18) inclut des moyens d'entraînement (108, 110, 111) destinés à entraîner ledit rouleau (18), de sorte que lorsque la botte (24) est en contact avec ledit rouleau (18), le rouleau (18) impartit un mouvement vers le bas à une portion arrière de la botte (24).

2. Appareil selon la revendication 1, caractérisé en ce que les moyens d'entraînement destinés à impartir un mouvement vers le haut à une portion avant de la botte (24) comprennent plusieurs rouleaux entraînés (11, 26, 27) disposés de manière parallèle à un arrangement qui est incliné vers le haut depuis le plan de transport (12) essentiellement horizontal.

3. Appareil selon la revendication 1 ou 2, caractérisé en ce que les moyens de transport incluent une courroie de transport (12) disposée de manière essentiellement horizontale sur le plan du support qui est une plaque tournante (6) et peuvent tourner autour de deux rouleaux (11, 11a) s'étendant de manière transversale par rapport à la plaque tournante (6) et placés à l'avant et à l'arrière respectivement de la plaque tournante (6), et dans lequel il y a une déflexion dans la courroie (12), la déflexion se trouvant entre 65 et 85 mm sous le niveau horizontal.

4. Appareil selon la revendication 1, caractérisé en ce que les moyens entraînés destinés à impartir un mouvement vers le haut à une portion avant de la botte (24) comprennent une courroie de transport (12) s'étendant vers le haut depuis le plan de transport et inclinée selon un angle par rapport à l'horizontale.

5. Appareil selon la revendication 4, caractérisé en ce que la courroie de transport (12) est entrainée entre un premier rouleau (11a) disposé de manière transversale par rapport à la plaque tournante (6) en une extrémité de la plaque tournante (6) et un second rouleau (47) disposé de manière parallèle au premier rouleau à l'autre extrémité de la plaque tournante (6) et déplacé de manière à tourner dans un plan essentiellement horizontal situé au-dessus du plan de rotation dudit premier rouleau (11a).

6. Appareil pour emballer une grosse botte (24) rectangulaire ou carrée de fourrage avec une bande de matière d'emballage (17), comprenant un support (6) qui est destiné à supporter la botte (24), des moyens de transport destinés à tourner la botte (24) autour d'un axe essentiellement horizontal et des moyens (16) destinés à fournir de manière continuelle une bande de matière d'emballage à la botte (24) lorsque la botte (24) est tournée à travers ledit axe pour enrouler la matière d'emballage (17) autour de la botte (24), et en ce que les moyens de transport comprennent une courroie de transport sans fin lâche (12) suspendue au-dessus du support (6) et incluent des moyens d'entraînement (213) pour la courroie (12), de sorte qu'une première portion de la courroie se déplace vers le haut dans une trajectoire inclinée vers le haut à une extrémité du support (6) tandis qu'une seconde portion de la courroie (12) se déplace vers le bas dans une trajectoire inclinée vers le bas à l'extrémité opposée du support (6), caractérisé en ce que la courroie de transport sans fin (12) présente une déflexion importante dans la courroie de transport (12) qui définit une auge dans la courroie pour recevoir la botte (24) et qui est destinée à prendre une forme essentiellement en U ou en V lorsqu'une botte (24) est placée sur la courroie (12), la déflexion dans la courroie (12) étant telle qu'il se produit un contact entre la courroie (12) et les côtés adjacents de la botte (24) durant la rotation de la botte (24) qui maintient la commande du mouvement de rotation de la botte (24) lorsque la botte (24) est tournée autour d'un axe horizontal de la botte (24).

7. Appareil selon la revendication 6, caractérisé en ce que la courroie de transport (12) est suspendue depuis deux rouleaux parallèles (212, 213) espacés au-dessus du support, qui peuvent comprendre une plaque tournante (6), un rouleau étant placé en une extrémité de la plaque tournante (6) et l'autre à l'autre extrémité de la plaque tournante (6), et dans lequel au moins l'un desdits rouleaux (213) est entraîné de manière à déplacer la courroie (12) autour desdits rouleaux (212, 213).

8. Appareil selon la revendication 6, dans lequel la courroie (12) se déplace autour de quatre rouleaux (210, 212, 213, 211) comprenant deux rouleaux inférieurs (210, 211) disposés de manière transversale par rapport à la plaque tournante (6) et placés en avant et en arrière de la plaque tournante (6) respectivement, et deux rouleaux supérieurs (212, 213) espacés au-dessus et parallèlement par rapport aux deux rouleaux inférieurs (210, 211) et dans lequel au moins l'un desdits rouleaux supérieurs (213) est un rouleau entraîné.

9. Appareil selon l'une des revendications précédentes, caractérisé en ce que la plaque tournante est munie d'éléments de retenue s'étendant vers le haut (35, 36) qui sont destinés à retenir le déplacement latéral d'une botte (24) supportée sur la plaque tournante (6).

10. Appareil selon l'une des revendications précédentes, caractérisé en ce que les moyens d'entraînement pour les moyens de transport (12) sont destinés à déplacer les moyens de transport (12) par paliers de manière intermittente.

11. Appareil selon l'une des revendications 1 à 10, caractérisé en ce qu'il inclut un dispositif de chargement (70) destinés à charger des bottes (24) sur le support comprenant une plaque tournante (6) de l'appareil pour emballer les bottes, le dispositif comprenant des moyens de saisie (71) destinés à saisir la botte (24), des moyens de levage (94) destinés à soulever les moyens de saisie (71) vers le haut selon un arc d'essentiellement 90° dans un premier plan essentiellement vertical, et des moyens (106) destinés à déplacer les moyens de saisie (71) soulevés selon un autre arc d'essentiellement 90° dans un second plan essentiellement vertical qui est essentiellement normal par rapport audit premier plan.

12. Appareil selon la revendication 11, caractérisé en ce que les moyens de saisie (71) comprennent au moins un bras de saisie (74) actionné de manière pivotante qui est destiné à saisir la botte.

13. Appareil selon la revendication 11, caractérisé en ce que les moyens de saisie (74) incluent un cadre (72, 73) qui est destiné à s'adapter autour de la partie supérieure et des côtés de la botte (24), le bras de saisie (74) étant fixé à une extrémité du cadre (73) et destiné à serrer la botte (24) entre ledit bras (74) et une paroi terminale (72) du cadre.

14. Appareil selon la revendication 13, caractérisé en ce que le bras de saisie (74) est monté de manière pivotante sur le cadre (73) et actionné au moyen d'un piston hydraulique (80).

15. Méthode pour emballer de grosses bottes (24) de fourrage de forme essentiellement rectangulaire ou carrée avec une bande de matière d'emballage (17) qui comprend les étapes consistant à :
a) placer la botte (24) sur un support avec un axe transversal plus court de la botte (24) disposé de manière transversale par rapport au support et un axe longitudinal plus long disposé essentiellement vers le haut du support, le support comprenant une courroie de transport sans fin (12),
b) fixer l'extrémité libre d'une alimentation en ladite matière d'emballage (17) à une surface de la botte (24),
c) entraîner la courroie de transport (12) pour avancer une portion de coin avant (24a) de la botte (24) vers le haut depuis l'horizontale le long d'une trajectoire inclinée pour incliner l'axe longitudinal de la botte depuis une position essentiellement verticale vers une position inclinée, et avancer simultanément une portion de coin arrière (24b) de la botte le long d'une trajectoire inclinée vers le bas,
d) avancer le coin arrière (24b) de la botte (24) le long d'une trajectoire inclinée vers le haut tandis qu'un coin suivant de la botte (24) est avancé le long d'une trajectoire inclinée vers le bas, et continuer l'avancement pour faire tourner la botte (24) autour de son axe transversal,
caractérisé en ce que la courroie (12) présente une déflexion importante qui assume une forme essentiellement en U ou en V lorsque la botte est avancée le long desdites trajectoires inclinées, et incluant les étapes supplémentaires consistant à :
e) commander le mouvement de rotation de la botte (24) en entretoisant la botte (24) dans la déflexion importante dans la courroie (12) et en maintenant le contact entre la courroie (12) et au moins deux côtés adjacents de la botte (24).
